(19) **Europäisches Patentamt / European Patent Office / Office européen des brevets**

(11) **EP 3 880 387 B1**

(12) # EUROPEAN PATENT SPECIFICATION

(45) Date of publication and mention of the grant of the patent:
**31.12.2025 Bulletin 2026/01**

(21) Application number: **19801387.2**

(22) Date of filing: **15.11.2019**

(51) International Patent Classification (IPC):
**B22F 1/16** *(2022.01)* **B22F 1/00** *(2022.01)*
**B22F 3/105** *(2006.01)* **B33Y 70/10** *(2020.01)*
**C22C 1/04** *(2023.01)* **B22F 3/24** *(2006.01)*
**B22F 1/065** *(2022.01)* **B22F 12/41** *(2021.01)*
**B33Y 80/00** *(2015.01)* **B22F 1/145** *(2022.01)*
**B22F 10/36** *(2021.01)* **B22F 10/25** *(2021.01)*
**B22F 10/28** *(2021.01)*

(52) Cooperative Patent Classification (CPC):
(C-Sets available)
**C22C 1/0425; B22F 1/065; B22F 1/145; B22F 1/16; B22F 12/41; B33Y 70/10; B33Y 80/00; C22C 1/0466;** B22F 10/25; B22F 10/28; B22F 10/36; B22F 2003/1052; B22F 2207/07; B22F 2999/00; Y02P 10/25 (Cont.)

(86) International application number:
**PCT/EP2019/081541**

(87) International publication number:
**WO 2020/099662 (22.05.2020 Gazette 2020/21)**

(54) **COPPER, GOLD, OR SILVER POWDER FOR POWDER BED ADDITIVE MANUFACTURING AND METHOD OF MANUFACTURING SUCH POWDER**

KUPFER-, GOLD- ODER SILBERPULVER FÜR DIE GENERATIVE FERTIGUNG EINES PULVERBETTES UND VERFAHREN ZUR HERSTELLUNG DIESES PULVERS

POUDRE DE CUIVRE, D'OR OU D'ARGENT DESTINÉE À LA FABRICATION ADDITIVE SUR LIT DE POUDRE ET PROCÉDÉ DE FABRICATION D'UNE TELLE POUDRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2018 GB 201818646**
**11.04.2019 EP 19168727**

(43) Date of publication of application:
**22.09.2021 Bulletin 2021/38**

(73) Proprietor: **Katholieke Universiteit Leuven**
**3000 Leuven (BE)**

(72) Inventors:
• **JADHAV, Suraj Dinkar**
**3000 Leuven (BE)**
• **DADBAKHSH, Sasan**
**3000 Leuven (BE)**

• **VANMEENSEL, Kim**
**3000 Leuven (BE)**
• **KRUTH, Jean-Pierre**
**3000 Leuven (BE)**

(74) Representative: **V.O.**
**P.O. Box 87930**
**2508 DH Den Haag (NL)**

(56) References cited:
EP-A1- 3 260 223   WO-A1-2017/217302
WO-A2-01/56736   US-A- 5 338 374
US-A1- 2018 051 376   US-A1- 2018 193 916
US-A1- 2019 275 587

• HASS G ET AL: "6g Optical properties of metals", 1 January 1963, AMERICAN INSTITUTE OF PHYSICS HANDBOOK, MCGRAW-HILL, PAGE(S) 6-103, XP009157885

**(Cont. next page)**

- **K.-E. PEIPONEN ET AL: "Metal surface roughness and optical reflectance", OPTICS AND LASER TECHNOLOGY, vol. 22, no. 2, 1 April 1990 (1990-04-01), NL, pages 127 - 130, XP055662464, ISSN: 0030-3992, DOI: 10.1016/ 0030-3992(90)90022-V**

Remarks:
The file contains technical information submitted after the application was filed and not included in this specification

(52) Cooperative Patent Classification (CPC): (Cont.)

C-Sets
B22F 2999/00, B22F 1/145, B22F 1/16,
B22F 2207/07, B22F 2201/02;
B22F 2999/00, B22F 1/145, B22F 1/16,
B22F 2207/07, B22F 2201/30

## Description

### Field of the invention

Embodiments of the present invention relate to composite powders and methods of manufacturing composite powders.

### Background of the invention

The use of additive manufacturing techniques, such as powder bed fusion additive manufacturing methods and direct energy deposition methods, for the manufacture of articles from highly reflective metals such as copper, gold or silver articles is challenging due to a number of factors.

In order to fabricate dense articles, a high power laser, such as a fibre laser, is required and copper, gold and silver are highly reflective at laser wavelengths above 800 nm, with high power fibre lasers emitting laser light in the 800-1100 nm wavelength range. This can result in back-reflection of the laser beam causing damage to laser optics and other components in the beam path. The same issues happen with gold and silver which are also highly reflective at the above mentioned wavelengths.

The use of high power laser beams can cause large temperature gradients in the parts being manufactured, which can result in thermal stresses in the parts.

US2017/225228A1 describes copper powder particles having an oxide film formed on the surface of the particles. The oxide film enhances the absorptance of an incident near-infrared laser beam at room temperature by the copper powder particles. However, at higher temperatures the oxides are less stable and they tend to evaporate, which can lead to the formation of pores in the part. Thus, presence of oxides can negatively affect the melt pool stability during the process. Moreover, the formation of the oxide layer requires an additional processing step of preheating the powder using a second laser beam within the manufacturing chamber. This can increase the complexity of the additive manufacturing apparatus. In addition to these processing issues, parts fabricated from laser based powder bed fusion techniques possess segregation of the remaining oxides along the melt pool boundaries which not only hamper mechanical properties but also reduce the electrical and thermal conductivity of the manufactured parts. Due to these issues, surface oxide formation neither avoids the risk of damaging laser optics nor allows parts having good mechanical and electrical properties to be produced.

US2017/225228A1 also uses carbon black applied to powder particles to assist absorption. Carbon in elemental form can be detrimental for mechanical properties of a part built using the powder. The presence of excess carbon can also cause cracking in such a part. Since liquid copper does not show any wettability with carbon, uniform distribution of carbon in a pure Cu melt cannot be achieved.

US 2018/0193916 relates to an alternative method to mechanical ball mixing processes for manufacturing precipitation dispersion strengthened alloys so as to overcome the disadvantages associated with the ball mixing process such as coarsening, agglomeration and non-uniform distribution of the pre-processed nano-sized oxide and nitrided particles. To this end this document describes a core-shell structured alloy powder for additive manufacturing comprising a plurality of particles where one or more of said plurality of particle comprise an alloy powder core and an oxygen or nitrogen rich shell disposed on at least a portion of the alloy powder core. The alloy powder core comprises an alloy constituent matrix with one or more reactive elements, where the reactive elements are configured to react with oxygen, nitrogen or both. The alloy constituent matrix comprises stainless steel, an iron based alloy, a nickel based alloy, a nickel-iron based alloy, a cobalt based alloy, a copper based alloy, an aluminium based alloy, a titanium based alloy, or combinations thereof. Suitable reactive elements that are listed include iron, chromium, nickel, aluminium, cobalt, carbon, molybdenum, manganese, magnesium, silicon, copper, nitrogen, niobium, titanium, refractory metals, tantalum, hafnium, yttrium, vanadium, tungsten, zirconium and boron. US 2018/0193916 is not at all concerned with providing composite copper, gold or silver powders having low reflectivity and high absorptivity for incident laser radiation. Most of the alloy constituents mentioned in this document do not exhibit laser reflectivity issues.

WO 01/56736 A2 discloses for example copper-silicon carbide particles with reduced reflectivity.

Therefore, there is a need for copper, gold and silver and other metals which are highly reflective in the infrared wavelength area, powders having a low reflectivity and high flowability and that are easy to manufacture, including a preferably large processing window guaranteeing high quality parts that are substantially crack and pore free and that can be processed with high reproducibility.

### Summary of the invention

According to a first aspect of the present invention, there is provided a composite powder according to claim 1.

The composite powder of the present invention is based on a metal having a high optical reflectivity at wavelengths above 800 nm (hereinafter referred to as the highly reflective metal) which is within the wavelength range of high power fibre lasers emitting laser light usually in the 800-1100 nm wavelength range. With high optical reflectivity is meant in the context of the present invention an optical reflectivity of more than 90%, preferably more than 95%, said optical reflectivity being measured on flat metal surfaces. Said reflectivity measurements are performed at normal angle on a flat, mechanically polished and electrochemically etched metal surface using a Cary Spectrophotometer and the optical constants such as index of refraction, extinction coefficient are determined using the Kramers-Kronig relations as described in Physical Review, 113 (4) of 1959, pages 1002-1005. The optical reflectivity of said metals in the powder form is generally more than 50 %, even more than 55% or 60 %. Optical light reflection measurements on powder forms of the metal can be carried out using a spectrometer (such as Lambda 950 spectrophotometer from PerkinElmer) and spectralon (USRS-99-010-EPV, Labsphere, Inc) as reference material having 100 % reflectivity.

The highly reflective metals are copper, silver, gold or mixtures thereof and is preferably copper.

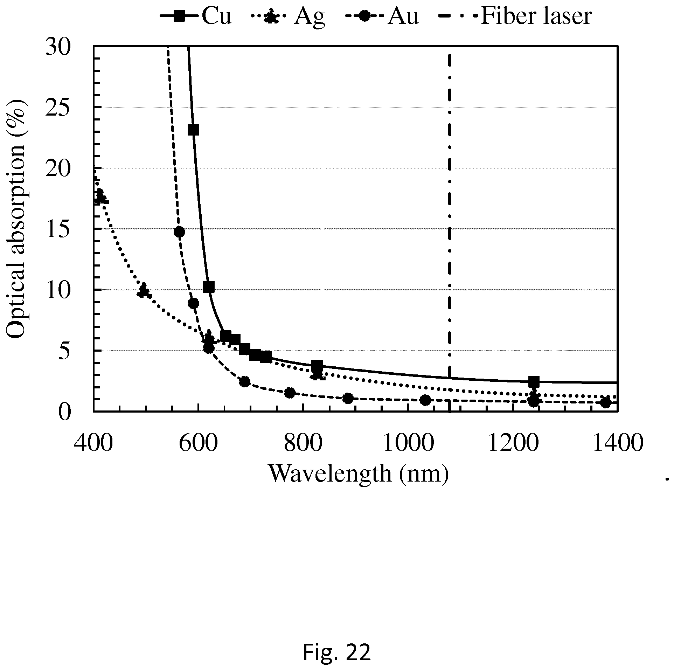

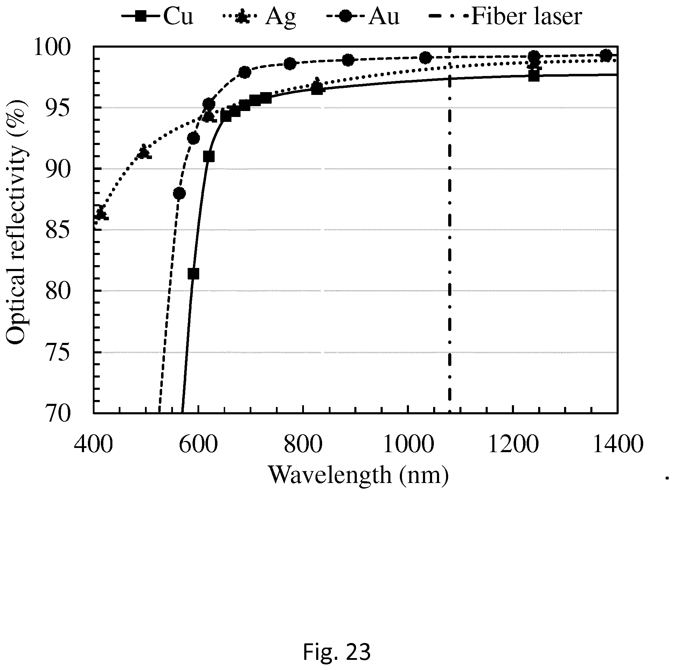

Reference is made to the Figures 22 and 23 showing optical absorptivity and optical reflectivity graphs of copper, gold and silver measured on flat metal surfaces.

It is an advantage of embodiments of the present invention that a surface modified powder of such highly reflective metal is provided having a low reflectivity and high absorptivity for incident laser radiation, particularly for infrared radiation. This results in decreased back-reflection and increased absorption of incident laser radiation, particularly for infrared radiation, which allows use of high power lasers for powder bed fusion additive manufacturing of such alloys. Dense and crack free parts can be manufactured even at lower laser powers, for example at 200-500 W.

It is an advantage of embodiments of the present invention that the nitrogen or carbon present (elemental or combined with alloying element) in the alloyed powder can react in-situ with oxygen during powder based laser fusion technique and acts as an oxygen scavenger for removing oxygen in gaseous forms such as nitrogen oxides or carbon oxides. Oxygen may be present in trace amounts (approximately 500 ppm but in some cases up to 2000 ppm) in the processing chamber for the powder bed fusion additive manufacturing method. Oxygen may also be present within the powder itself, for example at a level of approximately 500 ppm or higher. Thus, the present invention allows oxygen that is present within the powder to be removed during the powder bed fusion method. Additionally, the presence of the metallic alloying element such as Cr, Zr and their remaining respective nitride (CrN, ZrN), carbide (CrC, ZrC) or carbonitride ($CrC_{1-x}N_x$, $ZrC_{1-x}N_x$) in the melt pool has the advantage of allowing higher laser absorption, due to their lower reflectivity. Therefore, in-situ self-purification of the powder as well as high laser absorption according to the present invention can be achieved. This allows fabrication of parts having very high electrical and thermal properties.

It is an advantage of embodiments of the present invention that a highly reflective metal alloy powder can be provided having a characteristic of low oxygen pickup, that is, during storage of the powder the oxygen content of the powder does not increase above 2000 ppm. This allows the powder to be reused for multiple build processes and stored for multiple months without requiring an oxygen controlled storage environment.

It is an advantage of embodiments of the present invention that a highly reflective metal alloy powder comprising combination of metal (alloying element) and ceramic (metal nitride or metal carbide or metal carbonitride) reinforced highly reflective metal alloys can be provided. It is a further advantage of embodiments of the present invention that parts can be formed comprising such reinforced highly reflective metal alloy having substantially improved mechanical and electrical properties.

The powder according to embodiments of the present invention may comprise a mixture of metallic alloying element and its nitride, carbide or carbonitride. Generally, due to carburization, nitridation or a combination of both, metal nitrides, carbides or carbonitrides are present at surface of almost all the particles and subsequently, as additive manufacturing is generally a layer by layer process, an article produced using the composite powder will have substantially uniform distribution of these ceramic particles. This allows improved uniformity in the properties of the produced article, which may not be achievable by conventional processes such as casting, cold working etc.

During an additive manufacturing process such as selective laser melting (SLM) carried out in nitrogen atmosphere, when a laser interacts with the metal powder bed, elemental nitrogen, either from powder or the SLM chamber atmosphere, can react with the alloying element inside the liquid meltpool to form metal nitrides. The formation of nitrides results in reduction of amount of alloying element present in Cu as solid solution. This provides an increased conductivity of the as built article, this in-situ reaction mechanism may not be seen in articles formed using conventional processes such as solid state cold working processes.

It is an advantage of embodiments of the present invention that ceramic particles comprised in the powder such as CrN, can provide heterogeneous nucleation sites which allows parts to be produced having a fine grain microstructure. The higher melting point of ceramic particles compared to base alloy results in solidification of the ceramic particles at start. The ceramic particles can then provide nucleation sites for the growth of matrix metals. By providing more nucleation sites, a greater number of grains can be formed thus resulting in smaller grain sizes.

It is an advantage of embodiments of the present invention that a highly reflective metal alloy powder is provided having an increased shelf life due to the presence of a protective diffusion layer. Said highly reflective metal and alloy elements may react with oxygen to form respective oxides, which can reduce the shelf life of a the alloy powder. However, the powder according to embodiments of the present invention comprises a diffusion layer of a nitride or carbide providing a barrier between atmospheric oxygen and the highly reflective metal and the alloy element within the particle. The barrier limits formation of the surface oxides and increases the powder shelf life due to reduced powder aging. This allows the powder to be repeatedly reused in an additive manufacturing process.

The alloy element may comprise one or more elements selected from the group consisting of: Be, Mg, Ca, Sr, B, Al, Si, Ge, Ga, Th, Tl, In, Cr, Zr, Ti, Mo, Nb, Hf, Ta, V, W, Sc and Y.

The composite powder comprises an alloy depleted layer between the diffusion layer and the core element, the alloy depleted layer comprising the highly reflective metal and less than 2 wt.% alloy element.

The alloy element may comprise less than 5 wt.% of the total weight of the composite powder.

The alloy element has an equilibrium solid solubility at room temperature in the highly reflective metal of less than 2 wt.%. By equilibrium solid solubility as used herein is meant the ability of one metal to retain another metal in solid solution at room temperature in equilibrium condition.

Alternatively the alloy element is immiscible in the highly reflective metal at room temperature. By immiscible as used herein is meant that one metal cannot form a solid solution with another metal or cannot form a homogeneous mixture with said other metal. Immiscibility in this respect is equivalent to zero equilibrium solid solubility at all temperatures.

The nitride or carbide may be thermodynamically stable at a first temperature which is greater than room temperature.

The diffusion layer of a powder particle may have a thickness t and the powder particle may have a mean particle diameter D and the ratio t/D may be between 0.0001 and 0.1. The composite powder may have a laser absorption at a wavelength greater than 800 nm which is at least 50%.

The composite powder may have a flowability expressed in terms of the average angle and avalanche angle determined in a dynamic angle of repose test, wherein the average angle and avalanche angle are less than 40°.

According to a second aspect of the present invention there is provided use of a composite powder according to the first aspect in a powder bed fusion additive manufacturing method.

According to a third aspect of the present invention there is provided a method of producing an article by powder bed fusion additive manufacturing or direct energy deposition additive manufacturing using a laser source at wavelength W, with W being larger than 800 nm, comprising the steps of:

a) providing a powder layer or powder bed comprising composite powder according to the first aspect;
b) forming a shaped layer by melting and solidifying the composite powder at predetermined positions in the powder layer or powder bed using the laser source at wavelength W;
c) optionally applying a powder layer comprising the composite powder on the shaped layer;
d) repeating steps a) and b) and optionally step c) successively.

The method may further comprise the step of heat treating the article.

It is an advantage of embodiments of the present invention that a post heat treatment can allow both mechanical and electrical properties to be improved due to homogeneous and uniform precipitation of nano-sized metallic and ceramic particles inside the highly reflective metal matrix of the produced parts. Thus, a part with improved mechanical properties can be provided.

According to a fourth aspect of the present invention there is provided a method of producing a composite powder according claim 9.

Particular and preferred aspects of the invention are set out in the accompanying independent and dependent claims. Features from the dependent claims may be combined with features of the independent claims and with features of other dependent claims as appropriate and not merely as explicitly set out in the claims.

**Brief description of the drawings**

Further features of the present invention will become apparent from the examples and figures, wherein:

Figure 1 is a schematic depiction of a composite powder according to embodiments of the present invention;

Figure 2 is a schematic cross-section of a particle comprised in a composite powder according to embodiments of the present invention;

Figure 3a is a scanning electron microscope (SEM) image of a composite powder according to embodiments of the present invention;

Figure 3b is an SEM image of a cross-section of a particle comprised in a composite powder according to embodiments of the present invention;

Figure 4 is a flowchart depicting a method of manufacturing a composite powder according to embodiments of the present invention;

Figure 5a is a SEM image of cross section of embedded CuCr1 alloy powder particles before heat treatment in nitrogen (virgin state)

Figure 5b is an energy dispersive x-ray spectroscopy (EDS) mapping of chromium in the area labelled "A1" in Figure 5a before heat treatment in nitrogen (virgin state);

Figure 6a is an SEM image of a virgin copper alloy powder;

Figure 6b is a close-up SEM image of a particle comprised in a virgin copper alloy powder;

Figure 7a is an SEM image of a cross-section of a particle comprised in a composite powder according to embodiments of the present invention;

Figure 7b is a close up SEM image of the surface of a particle comprised in a composite powder according to embodiments of the present invention;

Figure 7c is a SEM image of cross section of embedded CuCr1 alloy powder particles after heat treatment in nitrogen according to embodiments of the present invention;

Figure 7d is an EDS mapping of chromium in area D of Figure 7c;

Figure 7e is an EDS mapping of nitrogen in area D of Figure 7c;

Figure 7f is an EDS mapping of chromium in the cross-section of Figure 7a;

Figure 7g is an EDS mapping of nitrogen in the cross-section of Figure 7a;

Figure 8 shows the results of an x-ray diffraction experiment performed on a virgin copper alloy powder and a composite powder according to embodiments of the present invention;

Figure 9 plots the optical absorption as a function of wavelength for a virgin copper alloy powder and a composite powder according to embodiments of the present invention;

Figure 10a shows how the avalanche angle and average angle of a powder are measured;

Figure 10b is a plot of the average angle and avalanche angle of a virgin copper alloy powder and a composite powder according to embodiments of the present invention;

Figure 10c plots the variation in time of the powder angle of a virgin copper alloy powder and a composite powder according to embodiments of the present invention during a dynamic angle of repose experiment;

Figure 11 is a flowchart of a method of manufacturing an article according to embodiments of the present invention;

Figure 12a shows cube shaped articles manufactured using a composite powder according to embodiments of the present invention;

Figure 12b shows bar shaped articles manufactured using a composite powder according to embodiments of the present invention;

Figure 12c shows dog bone shaped articles manufactured using a composite powder according to embodiments of the present invention;

Figure 13a is a plot of the relative density of cube shaped parts manufactured using selective laser melting (SLM) using a virgin copper alloy powder as a function of energy density during SLM;

Figure 13b is a plot of the relative density of cube shaped parts manufactured using SLM and using a composite powder according to embodiments of the present invention as a function of energy density during SLM;

Figure 14 is a plot of electrical conductivity for articles manufactured using a composite powder according to embodiments of the present invention and subjected to a first heat treatment after manufacture;

Figure 15 is a plot of electrical conductivity for articles manufactured using a composite powder according to embodiments of the present invention and subjected to a second heat treatment after manufacture;

Figure 16 shows optical light microscope (top) and SEM (bottom) images of the microstructure of an article manufactured using a composite powder according to embodiments of the present invention and not subjected to a heat treatment;

Figure 17 shows optical light microscope (top) and SEM (bottom) images of the microstructure of an article manufactured using a composite powder according to embodiments of the present invention and subjected to an aging treatment;

Figure 18 shows optical light microscope (top) and SEM (bottom) images of the microstructure of an article manufactured using a composite powder according to embodiments of the present invention and subjected to a solutionising treatment;

Figure 19 shows optical light microscope (top) and SEM (bottom) images of the microstructure of an article manufactured using a composite powder according to embodiments of the present invention and subjected to a solutionising treatment and an aging treatment;

Figures 20a to 20c show the optical absorption spectrum of various powders according to embodiments of the present invention, compared with pure copper and copper alloy powders;

Figure 21a is a plot of relative density of a cube manufactured using a virgin copper alloy powder mixed with carbon powder (before heat treatment), as a function of the energy density during SLM;

Figure 21b is a plot of relative density of a cube manufactured using a composite powder according to embodiments of the present invention comprising a carbide, as a function of the energy density during SLM.

Figure 22 is a plot of the optical absorption of Cu, Ag, and Au in the wavelength range 400 to 1400 nm. This graph was plotted based on the optical coefficients given in the CRC Handbook of Chemistry and Physics. These measurements are normally recorded for the flat surface.

Figure 23 is a plot of the optical reflectivity of Cu, Ag, and Au in the wavelength range 400 to 1400 nm. This graph was plotted based on the optical coefficients given in the CRC Handbook of Chemistry and Physics. These measurements are normally recorded for the flat surface.

## Detailed description of preferred embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated. The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein. In the drawings, like reference numerals indicate like features; and, a reference numeral appearing in more than one figure refers to the same element.

For the purpose of this disclosure "powder bed fusion additive manufacturing" refers to technologies for manufacture of three-dimensional objects from metal or metal alloy powders, in a layer-wise manner from individual cross-sections sliced from a CAD model by applying thin layers of powder to a build plate and by melting and fusing the powder at predetermined positions using an energy source (a laser or electron beam). Preferred techniques of powder bed fusion additive manufacturing comprise laser powder bed fusion additive manufacturing. Laser powder bed fusion additive manufacturing includes for example selective laser melting (SLM) techniques. In selective laser melting techniques selected regions on a metal powder bed are melted and solidify layer by layer.

For the purpose of this disclosure "direct energy deposition" refers to technologies to manufacture three-dimensional objects from metal or metal alloy powders, in a layer-wise manner from individual cross-sections sliced form a CAD model by injection of powders through one or more nozzles to make a melt pool by a focused and high-powered laser beam on a metal substrate using a laser energy source. Direct energy deposition is also known as direct metal deposition, laser metal deposition, laser cladding, laser engineered net shaping and laser powder forming techniques.

For the purpose of this disclosure additive manufacturing, powder bed fusion additive manufacturing and direct energy deposition refer to techniques for manufacture of three-dimensional articles as well as for providing a substrate with a coating layer.

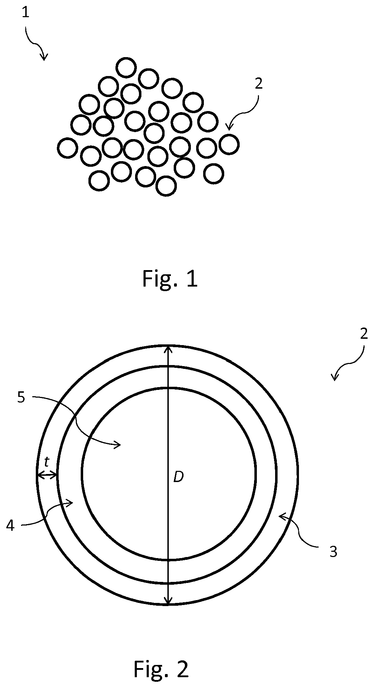

Referring to Figure 1, a composite powder 1 according to embodiments of the present invention comprises a plurality of powder particles 2. Referring also to Figure 2, each powder particle 2 comprises a core element 5, alloy depleted layer 4 and a diffusion layer 3. The diffusion layer 3 at least partially surrounds the alloy depleted layer 4 and core element 5. Preferably the diffusion layer 3 completely or almost completely surrounds the alloy depleted layer 4 and core element 5.

The core element 5 comprises pre-alloyed highly reflective metal matrix and an alloy element, which is not said highly reflective metal, and which is capable of forming a nitride, carbide or carbonitride. A carbonitride is an interstitial solid solution of the alloy element with both C and N located at interstitial positions in the lattice. The alloy element is alloyed with the highly reflective metal. For example, the alloy element may comprise one or more elements selected from the group consisting of Be, Mg, Ca, Sr, B, Al, Si, Ge, Ga, Th, Tl, In, Cr, Zr, Ti, Mo, Nb, Hf, Ta, V, W, Sc and Y. For example the S-block element Be is capable of forming the nitride $Be_3N_2$. The P-block element Si is capable of forming the carbide SiC. The D-block element Cr is capable of forming the nitride CrN, a transition metal nitride that is refractory.

The total weight of the alloy element preferably comprises less than 5 wt% of the total weight of the composite powder, more preferably less than 2 wt% or even less than 1 wt% of the total weight of the composite powder. The alloy element is preferably present at least in such an amount that a sufficiently thick diffusing layer is provided achieving lower reflectivity values for the surface-modified composite powder of the present invention.

The alloy element has an equilibrium solid solubility in the highly reflective metal at room temperature of less than 2 wt%. Preferably the equilibrium solid solubility of the alloy element in the highly reflective metal is as low as possible, such as less than 1 wt.% or even less than 0.5 wt.%. If the alloy element has a higher equilibrium solid solubility in the highly reflective metal at room temperature, then the alloy element will not diffuse outwards and form the diffusion layer.

The equilibrium solid solubility can also be 0 wt.%, which means that the alloy element is immiscible in the highly reflective metal at room temperature. The alloy element may have a low solid solubility, preferably zero, below 400°C.

The alloy element may be capable of forming a nitride, carbide or carbonitride which is thermodynamically stable at a first temperature which is greater than room temperature and the nitride, carbide or carbonitride may not be thermodynamically stable at room temperature. For example, as will be described in more detail hereinafter, the alloy element may be capable of forming a nitride, carbide or carbonitride which is thermodynamically stable at a heat treatment temperature which is greater than room temperature and the nitride or carbide may not be thermodynamically stable at room temperature. The thermodynamic stability of the nitride, carbide or carbonitride at the heat treatment temperature can provide a driving force or activation energy for the alloy element to diffuse towards the particle surface, forming the alloy depleted layer 4 and the diffusion layer 3.

The composite powder may comprise less than 1000 ppm nitrogen or carbon in elemental form, this being an amount not significant enough to substantially affect the mechanical properties of parts manufactured using the composite powder. The electrical properties of such parts may be affected to a limited extent (e.g. a reduction of less than 10% IACS) by the elemental carbon or nitrogen. It is an advantage of embodiments of the present invention that nitrogen or carbon present in elemental form or combined with alloying element in the composite powder can react in-situ with oxygen during a powder based laser fusion technique and become removed in gaseous forms such as nitrogen oxides or carbon oxides.

Referring still to Figure 2, a powder particle 2 comprised in the composite powder 1 has an average diameter or particle size D. The particle size of the powder particles ranges preferably between 2 $\mu$m and 200 $\mu$m, more preferably

between 5 μm and 100 μm, such as for example between 15 μm and 50 μm. The particle size can be determined by a laser diffraction particle size analyser, for example a LS 13 320 laser diffraction particle size analyser from Beckman Coulter. In a laser diffraction particle size analyser, the particle size distribution is measured by determining the angular variation in intensity of light scattered as a laser beam passes through a dispersed particle sample. The scattering angle is inversely proportional to the particle size and hence the particle size is determined.

Alternatively, the particle size of the particles can be determined by visualizing the particles under a microscope and measuring their sizes.

The diffusion layer 3 comprises the alloy element and a nitride or carbide compound, and the nitride or carbide compound comprises the alloy element. For example, in embodiments wherein the alloy element is Cr, the diffusion layer 3 comprises the alloy element Cr and the nitride compound CrN which comprises the alloy element Cr. The diffusion layer 3 preferably comprises less than 10 wt% of the highly reflective metal.

The alloy depleted layer 4 can be thought of as the region from which the alloying element diffuses to form the diffusion layer 3. The alloy depleted layer 4 comprises mainly the highly reflective metal with a maximum 2 wt% of the alloy element.

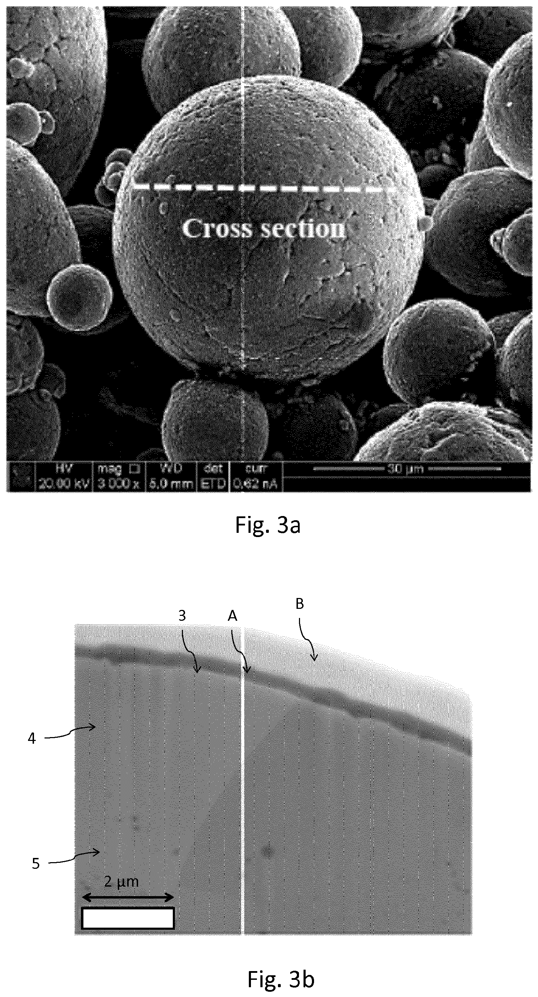

The diffusion layer 3 has a thickness t. The diffusion layer thickness can be measured for example by cutting a powder particle using a focused ion beam coupled with a scanning electron microscope and imaging the cross-sectional surface of the cut powder particle using the scanning electron microscope (SEM). Referring to Figure 3a, an SEM image of a powder according to embodiments of the present invention is shown, illustrating a line of cross-section on a powder particle. Figure 3b shows the cross-sectional surface of the powder particle cut using a focused ion beam. The diffusion layer 3 can be seen at the surface of the alloy depleted layer 4. The darker shaded layer A at the outside of the diffusion layer 3 is a platinum layer deposited before cutting the particle to prevent rounding of the diffusion layer during cutting. The lighter shaded layer B at the outside of the shaded layer A is the surface of the particle, which is not in focus, The diffusion layer thickness may be calculated as an average, for example measuring the thickness at multiple points and averaging the measurements. The diffusion layer thickness need not be constant at each point on the surface of the powder particle provided that the average thickness of the diffusion layer over the surface of the powder particle is greater than the penetration depth of a laser into the powder particle 2. For example, the diffusion layer thickness may vary by 50 nm, 100 nm, 200 nm, 300 nm, or 400 nm. For example, the laser may be a Nd/YAG laser with a wavelength of 1064 nm having a penetration depth of approximately 30 nm and the average diffusion layer thickness is preferably greater than 30 nm, for example at least 50 nm, at least 100 nm, within the range 100 nm to 500 nm. The minimum diffusion layer thickness should be greater than the theoretical penetration depth of the laser, which is generally about 10-50 nm.

The ratio of the diffusion layer thickness $t$ and the mean particle diameter $D$ is preferably greater than 0.0001 and less than 0.1, that is, $0.0001 < t/D < 10$. For example, for the particle shown in Figure 3, the powder particle has a mean particle diameter of 45 μm and the diffusion layer thickness ranges between 200 nm and 700 nm, leading to the ratio $t/D$ being in the range 0.0044-0.015.

The powder 1 preferably has a laser absorption at a wavelength greater than 800 nm which is at least 50%, more preferably at least 60%.

The absorption is determined using an integrating sphere diffuse reflectance spectrometer using different light sources covering the 200-2500 nm wavelength. Absorption of electromagnetic radiation is the way in which the energy of a photon is taken up in the matter, typically the electron of an atom. Thus, the electromagnetic energy is transformed into internal energy of the absorber, for example thermal energy. The reduction in intensity of a light wave propagating through a medium by absorption of radiation, as a function of frequency or wavelength, is due to its interaction with a sample. The sample absorbs energy, i.e. photons, from the radiating field. The intensity of the absorption varies as a function of frequency, and this variation is the absorption spectrum. Absorption spectroscopy is performed across the electromagnetic spectrum.

In the method to determine the absorption an integrating sphere (also known as an Ulbricht sphere) is an optical component consisting of a hollow spherical cavity with its interior covered with a diffuse white reflective coating, with small holes for entrance and exit ports. Its relevant property is a uniform scattering or diffusing effect. Light rays incident on any point on the inner surface are, by multiple scattering reflections, distributed equally to all other points. The effects of the original direction of light are minimized. An integrating sphere may be thought of as a diffuser which preserves power but destroys spatial information. It is typically used with a light source and detector for optical power measurement. The theory of integrating spheres is based on the following assumptions : a) light hitting the side of the sphere is scattered in a diffuse way i.e. Lambertian reflectance and b) only light that has been diffused in the sphere hits the ports or detectors used for probing the light.

The powder 1 preferably has a flowability expressed in terms of the average angle and avalanche angle determined in a dynamic angle of reposes test, wherein the average angle and avalanche angle are less than 40°.

The dynamic angle of repose (AoR) test can be carried out using a light source and a rotating drum filled with powder (revolving cylinder method).

The angle of repose, also called the critical angle of repose or avalanche angle, is the steepest angle of descent or dip relative to the horizontal plane at which a material can be piled without slumping. At this angle, the material on the slope face is on the verge of sliding. The angle of repose can range from 0° to 90°. The morphology of the material can affect the angle of repose.

For the dynamic angle of repose test, the material under investigation is placed within a cylinder with at least one transparent face. The cylinder is rotated at a fixed speed (for example 3 rpm (revolutions per minute)) and the observer watches the material moving within the rotating cylinder. The granular material will assume a certain angle as it flows within the rotating cylinder. To perform the measurement, the rotating drum is back-illuminated with a stroboscope and the granular flow is recorded using a CCD camera with a resolution of 1024x1024 pixels. The average angle of repose and avalanche angle are determined. The avalanche angle is the maximum angle before the powder slides or falls off to a minimum angle with respect to horizontal. Average angle of repose is the average of maximum (avalanche) and minimum angles measured during the test.

The average angle of repose and the avalanche angle of repose of a composite powder according to embodiments of the present invention are preferably less than 40°. More preferably, the average angle of repose and the avalanche angle of repose are less than 35° or less than 30°. It is an advantage of embodiments of the present invention having a good flowability that an improved density of the produced article can be obtained. A good flowability allows that during the deposition or spreading of a layer of powder in an additive manufacturing method, the powder layer can be more uniformly deposited or applied. This can provide a more homogeneous powder layer which can allow dense parts to be manufactured.

It is an advantage of embodiments of the present invention having a good flowability that an improved density of the produced article can be obtained.

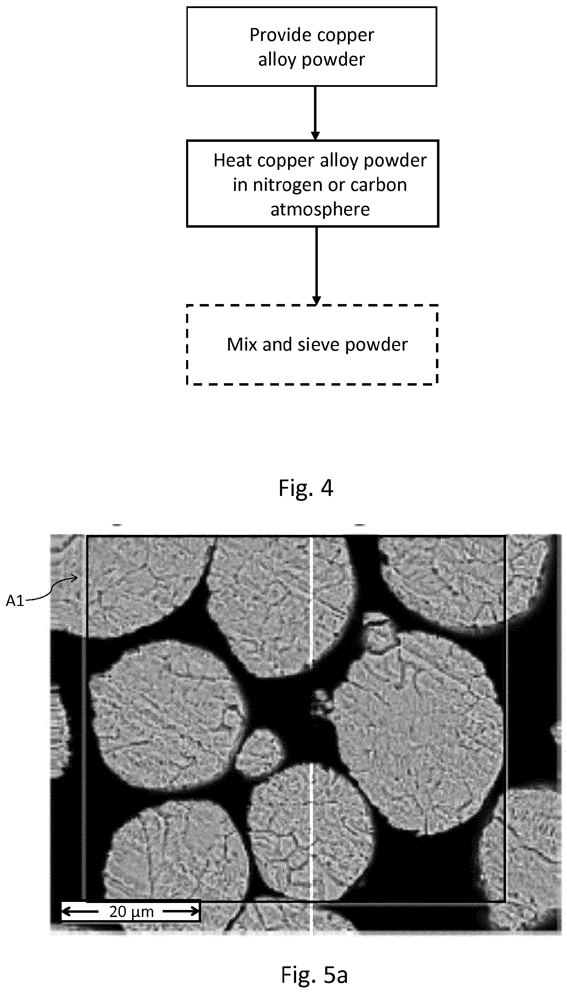

Referring to Figure 4, a method of manufacturing a powder according to embodiments of the present invention comprises the following steps:

*Step S1*

A highly reflective metal alloy such as copper alloy powder is provided. The copper alloy powder comprises copper and an alloy element capable of forming a nitride or a carbide. The alloy element is not copper. For example, the alloy element may comprise one or more elements selected from the group consisting of Be, Mg, Ca, Sr, B, Al, Si, Ge, Ga, Th, Tl, In, Cr, Zr, Ti, Mo, Nb, Hf, Ta, V, W, Sc and Y. For example the S-block element Be is capable of forming the nitride $Be_3N_2$. The P-block element Si is capable of forming the carbide SiC. The D-block element Cr is capable of forming the nitride CrN, a transition metal nitride that is refractory.

The alloy element has an equilibrium solid solubility in the highly reflective metal such as copper at room temperature of less than 2 wt%. The alloy element is preferably immiscible in the highly reflective metal such as copper at room temperature. With equilibrium solid solubility above 2 wt% at room temperature, the electrical conductivity tends to decrease very drastically with increasing equilibrium solid solubility. A low equilibrium solid solubility, e.g. less than 2 wt% at room temperature, allows for a high electrical conductivity in an article manufactured using the composite powder. In addition, a low equilibrium solid solubility, e.g. less than 2 wt% at room temperature, allows for efficient diffusion of the alloy element to the edge of the core element for forming the diffusion layer thereby modifying (lowering) the powder reflectivity.

The alloy element may be capable of forming a nitride or carbide or carbonitride which is thermodynamically stable at a first temperature which is greater than room temperature and the nitride, carbide or carbonitride may not be thermodynamically stable at room temperature. For example, the alloy element may be capable of forming a nitride, carbide or carbonitride which is thermodynamically stable at a heat treatment temperature which is greater than room temperature and the nitride or carbide may not be thermodynamically stable at room temperature. The thermodynamic stability of the nitride or carbide or carbonitride at the heat treatment temperature can provide a driving force, or energy for diffusion, for the alloy element to diffuse towards the powder surface forming an alloy depleted layer 4 and the diffusion layer 3.

The highly reflective metal alloy powder may be a gas-atomized pre-alloyed powder. The gas used for atomization may be any inert gas such as He, Ar, $N_2$. The highly reflective metal alloy powder need not be gas-atomised and any pre-alloyed and generally spherical powder, preferably having a particle size range between 20 and 60 μm, may be used as the virgin powder.

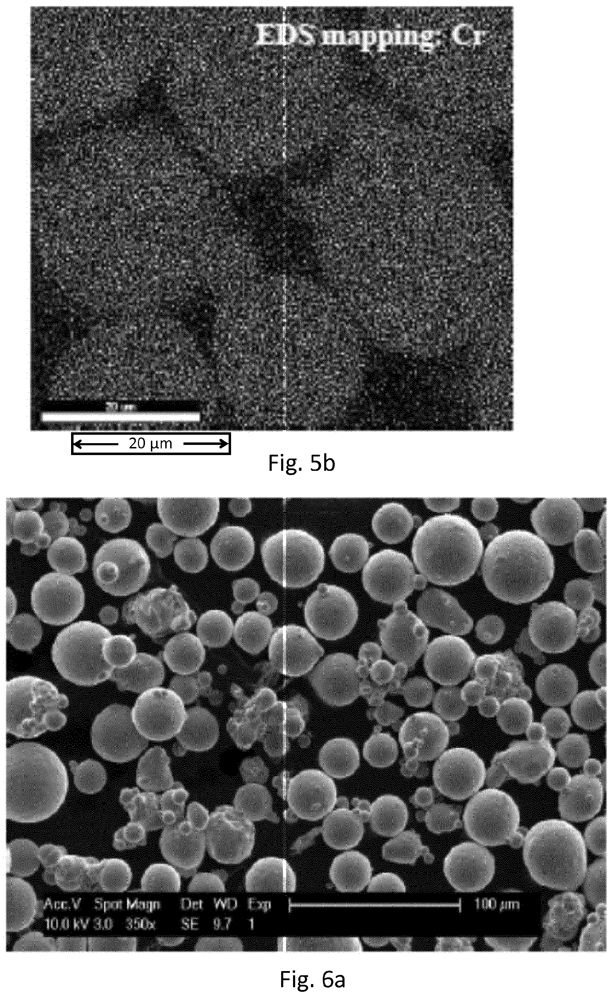

For analysis purposes, the Cu alloy powder was embedded in Bakelite resin, ground on abrasive papers with grit sizes 1200 and 4000 and polished using 3 μm diamond suspension on a smooth cloth. Figure 5a shows a cross-sectional SEM image of the argon atomized pre-alloyed copper chromium powder. Figure 5b shows an energy dispersive X-ray spectroscopy (EDS) mapping of the chromium content. It can be seen that the Cr is substantially uniformly distributed within the copper matrix of the copper alloy powder particles in the virgin powder, that is, before the powder is subjected to heat treatment in nitrogen or carbon atmosphere.

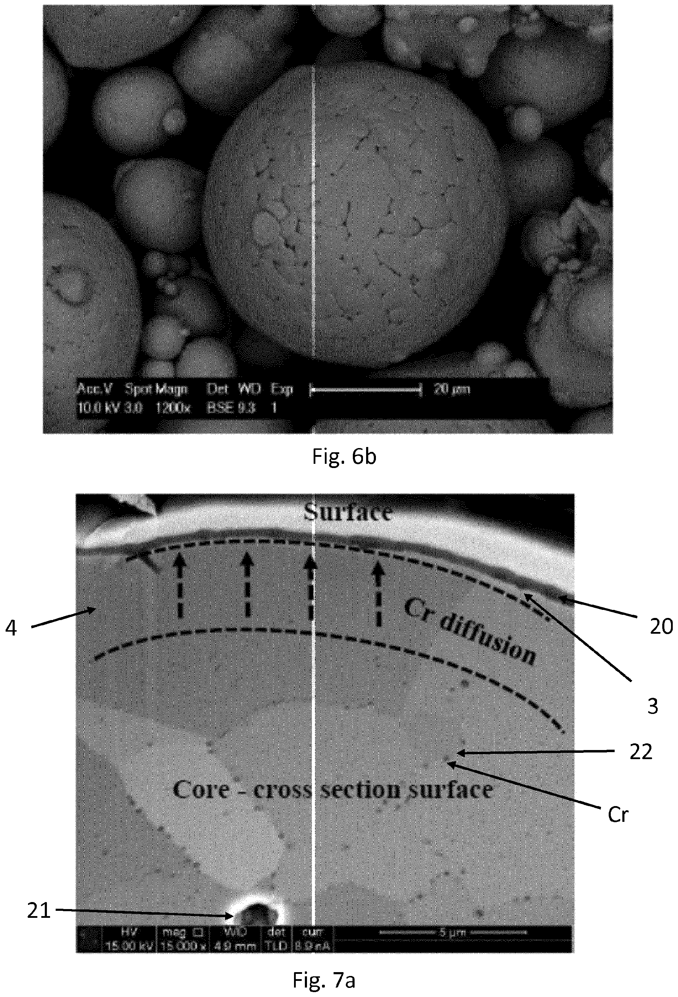

Referring to Figure 6a, an SEM image of the pre-alloyed copper chromium powder is shown. It can be seen in the image of Figure 6b, an SEM image at a smaller scale than Figure 6a, that the powder particles of the pre-alloyed CuCr powder have a relatively smooth surface.

The pre-alloyed highly reflective metal powder may be mixed mechanically with nano-sized carbon particles for providing a carbon atmosphere in step S2. For example, the heat treatment in step S2 may be done in an atmosphere of an inert gas such as argon. The carbon particles preferably have a diameter of less than 100 nm. The premixed carbon particles provide a carbonaceous atmosphere for outward diffusion of the alloy element and formation of carbides. The nano size carbon reacts with any oxygen present in the chamber in which the heat treatment takes place and is released as carbon (mono and di) oxide. The carbon also diffuses and reacts with the alloying element of the virgin powder to form carbides in the case that the alloy element is capable of forming a carbide. For example, the alloy element may be chromium which is capable of forming chromium carbide. These two processes can cause substantially all of the carbon present in the nano-sized particles to be released or converter to a carbide or gas.

A heat treatment experiment was carried out on CuCrl alloy (that is, copper alloyed with chromium where the chromium is present in a proportion of 1 wt%) mixed with C in a proportion of 0.1 wt.% carbon. After a heat treatment for 2.5 hour at 750°C, it was found that the amount of free carbon remaining, that is, carbon not forming part of a carbide, was very low. Approximately 10% of the carbon initially present in the form of the nano-sized carbon particles was evaporated by forming carbon mono-/di-oxides and rest was in the form of alloy carbides or elemental carbon.

The pre-alloyed highly reflective metal powder may be provided with a carbon coating, for example using chemical vapour deposition methods, sputter coating, physical vapour deposition methods, for providing a carbon atmosphere in step S2. The carbon coating preferably comprises an amount of carbon sufficient to form carbides with at least half of the alloy element present in the particles. The carbon coating preferably makes up no more than 0.1 wt% of the coated particle.

Thus the carbon atmosphere can be provided in more than one manner, including by mixing nano-sized carbon particles with the virgin powder and then heat treating in an inert or carbonaceous atmosphere such as methane (for the same or similar temperature and time range as the treatment in the nitrogen atmosphere); by heat treating the virgin powder directly in a carbonaceous atmosphere at high temperature (for the same or similar temperature and time range as the treatment in the nitrogen atmosphere). In some embodiments heating the powder in an inert atmosphere may be preferred as inert gases are readily available and leakage of such a gas may not cause flammability issues. In some embodiments heating the powder in a gaseous carbon atmosphere may be preferred as this can enhance the diffusion kinetics.

*Step S2*

The highly reflective metal such as copper alloy powder is heated in a nitrogen, carbon, or nitrogen-carbon atmosphere at a temperature between 500°C and 900°C, more preferably between 600°C and 850°C for a duration of 1 hour. The highly reflective metal alloy powder may be heated for a longer duration, for example up to 10 hours or longer. During this heating step the diffusion layer is formed. At temperatures below 400°C, the outward diffusion of the alloy element does not take place due to slow diffusion kinetics and the diffusion layer is not formed.

By "nitrogen, carbon, or nitrogen-carbon atmosphere" it is meant an atmosphere having a composition comprising at least an amount of nitrogen or carbon sufficient to form metal nitrides, carbides, or carbonitrides with at least 10%, preferably at least 20%, at least 30%, or at least 40% of the amount of the alloy element present in the powder, forming a diffusion layer that at least partially covers the core element. For example, if the particle size is 45 $\mu$m and it is assumed that Cr from the top 10 $\mu$m is used for formation of nitrides then the volume of the Cr depleted layer can be calculated by subtracting the volume of sphere with 35 $\mu$m diameter from the volume of a sphere with 45 $\mu$m diameter. This calculation gives a depletion layer having a volume of approximately 47% of the total volume of the particle. If uniform distribution of Cr in the virgin powder is assumed then about 47% of Cr is used for forming nitrides. In embodiments wherein the nitrogen or carbon is provided in gas form, the gas is preferably provided as a continuous flow of gas where the total amount of gas provided during the heat treatment is at least sufficient to form metal nitrides with at least 10%, preferably at least 20%, at least 30%, or at least 40% of the amount of the alloy element present in the powder. Nitrogen in gas form may be provided as $N_2$ or $NH_3$. A nitrogen-carbon atmosphere may be provided by a gas mixture of, for example, $CH_4$ and $N_2$ or $CH_4$ and $NH_3$.

In some embodiments, the carbon atmosphere is provided by a carbon coating or nano-sized carbon particles as described in relation to step S1. The carbon coating or nano-sized carbon particles provide a source of carbon for diffusion into the virgin powder, and the diffusion layer is formed in solid state.

In some embodiments, the carbon atmosphere is provided by a carbonaceous gas such as methane or liquefied petroleum gas (LPG). The carbon may diffuse further into the powder particles than when carbon is provided in solid state.

Thus where a "nitrogen, carbon, or nitrogen-carbon atmosphere" is referred to herein, it will be understood that this does not necessarily refer to nitrogen or carbon in gas form. The carbon atmosphere may be provided by nano-sized carbon particles mixed with the virgin powder. The carbon atmosphere may be provided by a carbon coating on the virgin powder particles.

Any nitrogen or carbon present in the atmosphere in addition to the minimum required amount does not detrimentally affect the powder manufacture or the properties of the powder as the excess nitrogen or carbon does not react with the formed nitrides, carbides, or carbonitrides.

The atmosphere in the chamber may additionally comprise a nonreactive gas such as argon or helium. The atmosphere in the chamber preferably comprises no more than 500 ppm total of contaminants and more preferably less than 100 ppm or less than 50 ppm of contaminants. Herein a contaminant is an element or substance which can have detrimental effects on the mechanical or electrical properties of the highly reflective metal or which can impede the nitride, carbide, or carbonitride formation reaction, for example oxygen or hydrogen. In some embodiments, the highly reflective metal alloy powder is heated in a treatment chamber and the atmosphere of the chamber is provided in the desired composition at the start of the heat treatment. For example, an amount of nitrogen and/or carbon may be provided in the chamber at the start of the heat treatment and no more nitrogen and/or carbon may be provided during the heat treatment. In some embodiments, the highly reflective metal alloy powder is heated in a treatment chamber and a continuous supply of nitrogen or carbonaceous gas or a combination of gases comprising nitrogen and carbon is provided to the chamber during the heat treatment. At an instant during the heat treatment step S2 the chamber may not contain the entire amount of nitrogen or carbonaceous gas or combination of gases comprising nitrogen and carbon required to convert substantially all of the alloy element present in the virgin powder to a nitride or carbide or carbonitride, provided that the cumulative amount of gas provided during the heat treatment is at least the amount required to convert at least 10%, preferably at least 20%, at least 30%, or at least 40% of the alloy element present in the virgin powder to a nitride or carbide or carbonitride.

In some embodiments, the amount of nitrogen or carbonaceous gas or combination of gases comprising nitrogen and carbon provided may be predetermined in dependence upon the amount of alloy element present in the virgin powder as described hereinbefore. In some embodiments, the nitrogen or carbonaceous gas or combination of gases comprising nitrogen and carbon may be provided continually and the thickness of the diffusion layer can be monitored. The supply of nitrogen or carbonaceous gas or combination of gases comprising nitrogen and carbon can be stopped once the thickness of the diffusion layer reaches a specified value. For example, the optical absorption of the powder can be monitored during powder formation and the supply of gas (if present) and the heat treatment can be stopped when the absorption reaches a specified value.

An optional mixing and sieving step S3 may take place following step S2. The mixing may be achieved for example using a TURBULA Shaker-Mixer. This step S3 can help to separate powder particles in case of agglomeration during the heat treatment.

A virgin copper alloy powder comprising 1 wt% Cr was heated at 750°C for a duration of 1 hour in an atmosphere comprising nitrogen. The nitrogen gas $N_2$ was provided as a continuous flow at a rate of 50 litres per hour.

Referring to Figure 7a, an SEM image of a powder particle 2 comprised in a powder according to embodiments of the present invention in cross-section is shown. The particle 2 was coated with a platinum layer 20 and cut using a focused ion beam. Chromium is present at the centre 21 of core 5 of the particle and at grain boundaries 22 within the core 5 of the particle 2. The diffusion layer 3 and alloy depleted layer 4 are shown.

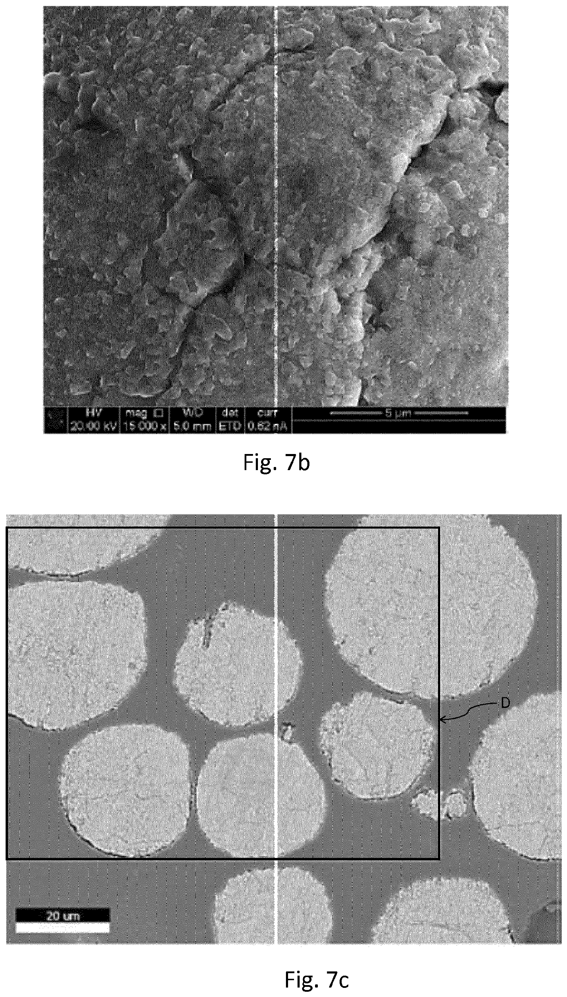

Referring to Figure 7b showing an SEM image of the outer surface of the cut powder particle of Figure 7a, it can be seen that the outer surface is relatively rough as compared to the surface of the virgin powder particles (Figure 6b).

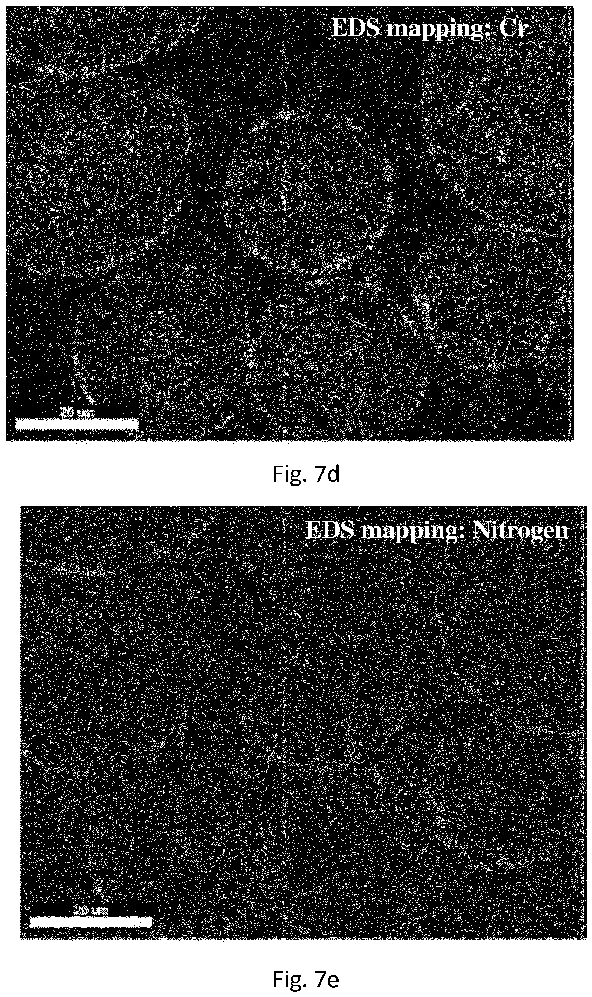

Referring to Figure 7c showing SEM topographical image of the cross sections of powder particles comprised in the powder, along with Figure 7d showing an EDS mapping with respect to Cr and Figure 7e showing an EDS mapping with respect to elemental Nitrogen, it can be seen that Chromium is present at the surface of the powder particles and also within the particles, and nitrogen is present only at the surface of the particles.

Figures 7d and 7e are EDS mappings of the area D shown in Figure 7c.

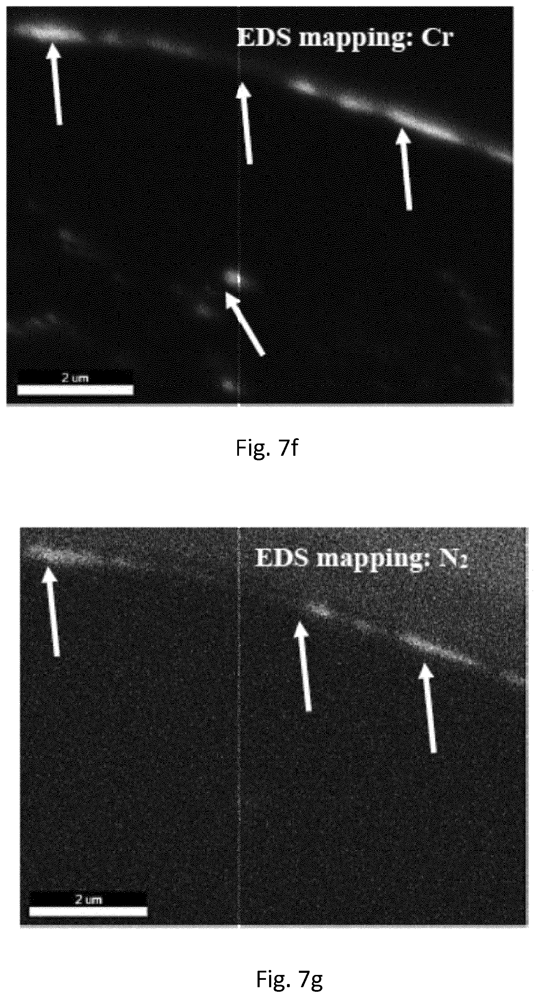

These observations can also be seen in Figure 7f showing an EDS mapping with respect to Cr of the particle cross-section shown in Figure 7a and Figure 7g showing an EDS mapping with respect the elemental Nitrogen of the same cross-section.

These results show that the Cr observed in the core of the particle is metallic (due to the absence of nitrogen in the core), whereas the Cr detected at the surface of the particle could take the metallic form and/or the chromium nitride form.

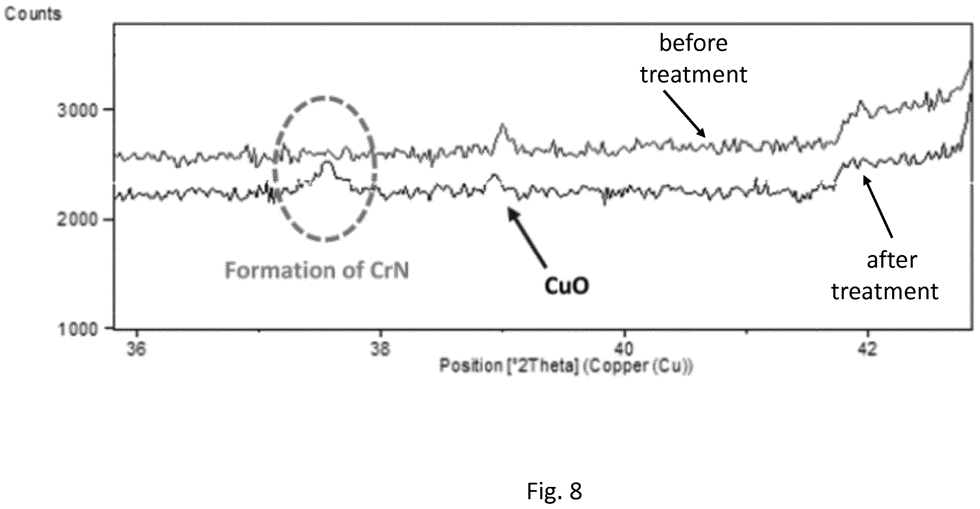

In order to investigate the form of Cr present at the particle surface, an x-ray diffraction experiment was performed on the virgin and treated powders. Referring to Figure 8, the CrN peak can be seen for the treated powder, which is not present for the virgin powder. It can be concluded that this composite powder comprises Cr in metallic form in the core of the powder particles and in nitride form at the surface of the particles. Chromium observed in the core of the powder particle according to embodiments of the present invention can be classified as substantially metallic, whereas chromium detected at the outer surface of the powder particle takes the form of chromium nitride and may also comprise a small amount of chromium in metallic form, preferably less than 10 wt.% of the diffusion layer, more preferably less than 5 wt.% or less than 2 wt. %.

*Optical properties*

Optical light reflection measurements were carried out on the virgin powder and the composite powder according to embodiments of the present invention, using a Lambda 950 spectrophotometer (PerkinElmer) and spectralon (USRS-99-010-EPV, Labsphere, Inc) as a reference material having 100% reflectivity. The measurements were carried out for light with wavelengths from 400 to 1400 nm. The reflectivity was determined for each wavelength and the corresponding absorption percentage A% was calculated as A% = 100 - R%, where R% is the percentage of the light incident on the powder which is reflected.

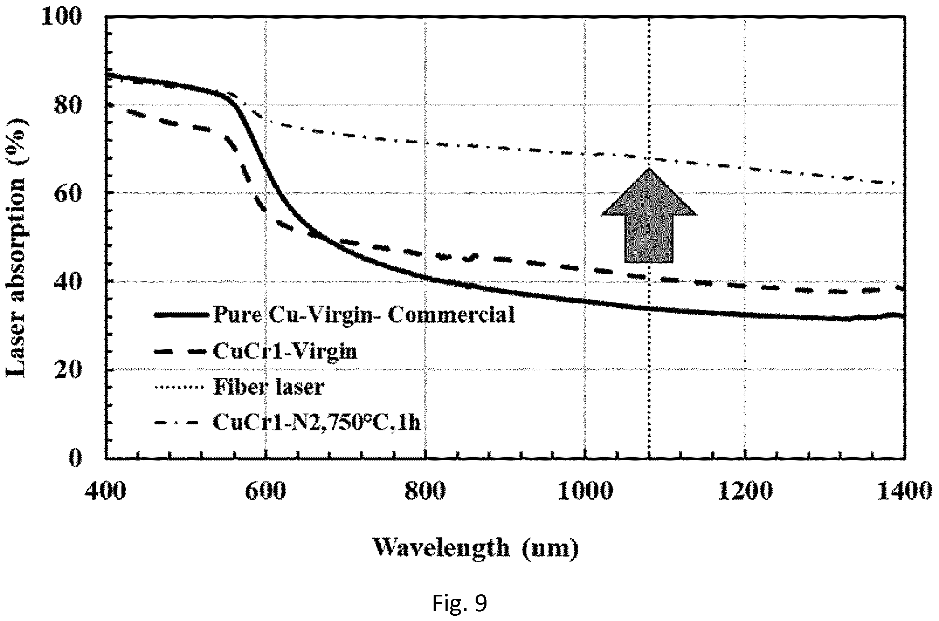

Referring to Figure 9, the optical absorption is shown for pure copper, virgin pre-alloyed CuCrl powder, and the heat treated powder described in the previous section. The virgin powder exhibits slightly higher optical absorption, 40%, than the pure Cu powder at a wavelength of 1080 nm, this being a common fibre laser wavelength used in additive manufacturing. However, the reflectance is still relatively high, as is the risk of damaging laser optics through back-reflection of the laser from the powder through the optical system. The composite powder according to embodiments of the present invention exhibits a much greater absorption of approximately 68%, greatly reducing the risk of damage due to back-reflections. The improved absorption is observed over a wide range of wavelengths including 400 nm - 1400nm, a range which includes wavelengths commonly used in additive manufacturing methods.

*Flowability*

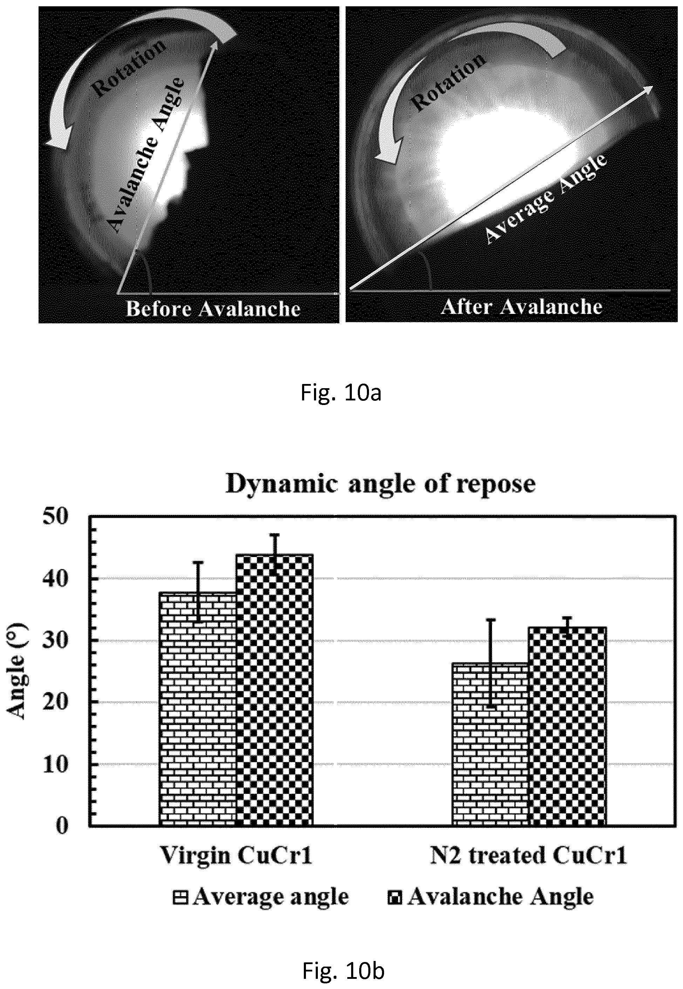

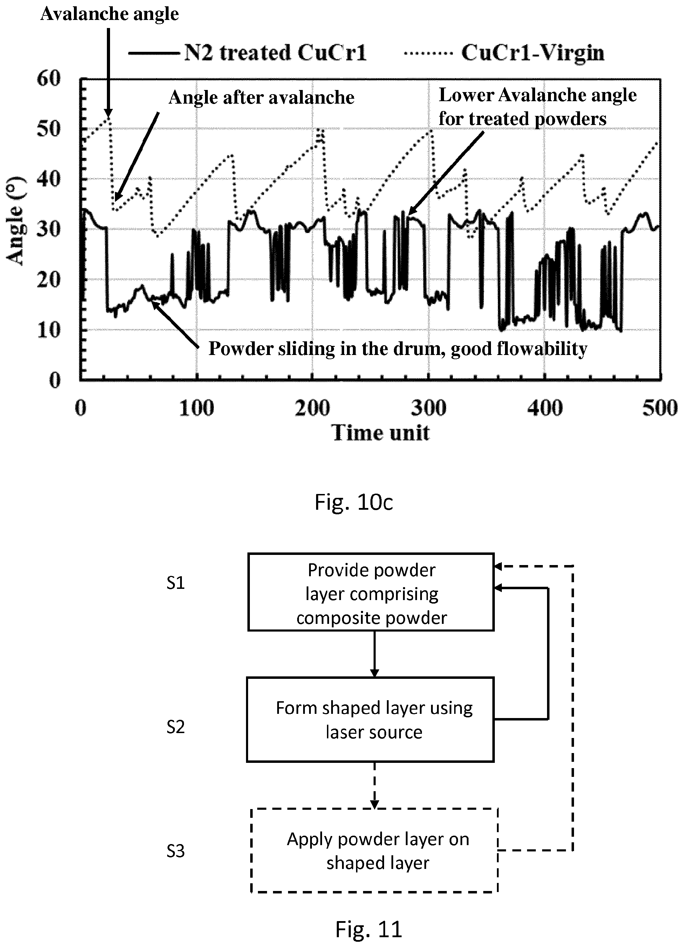

The flowability of the virgin powder and the composite powder was also measured using the dynamic angle of repose technique. Figure 10a shows how the average angle and avalanche angle are defined. Referring to Figure 10b, the dynamic angle measurements when the drum filled with powder is rotated at 3 RPM are shown. The highest peak is the avalanche angle for the respective powders and the lowest angle is observed when the powder falls. The curve for the virgin powder is always at higher angles than the curve for the treated powders, showing that the virgin powder has a poor flowability. It can be seen, also from Figure 10c, that the composite powder has a lower average and avalanche angle than the virgin powder, leading to an improved flowability.

Embodiments of the present invention provide a method of manufacturing an article using a composite powder as described hereinbefore.

Referring to Figure 11, a flow chart of a method according to embodiments of the present invention is shown. The method is a method of producing an article by powder bed fusion additive manufacturing or direct energy deposition additive manufacturing using a laser source at wavelength W, with W being larger than 800 nm. The laser source is preferably a fibre laser or a YAG laser, in particular a Nd:YAG laser. A Nd:YAG laser emits light with a wavelength of 1064 nm. However, there are also transitions near 946 nm, 1120 nm, 1320 nm and 1440 nm. A Nd:YAG laser operates both in pulsed and continuous mode. Also diode lasers with a wavelength ranging between 800 nm and 2000 nm or $CO_2$ lasers having a wavelength of about 10000 nm can be considered.

In step S1, a powder layer or powder bed comprising composite powder according to embodiments of the present invention is provided. The powder layer or powder bed can be applied on a build plate (in case a three-dimensional article is manufactured from the composite powder) or can be applied on a (metal) substrate (in case a (metal) substrate is provided with a coating layer). The powder layer or powder bed can be applied by any technique known in the art. The powder layer or powder bed is for example applied by means of a coating process, a deposition system or a nozzle.

In step S2, a shaped layer is formed by melting and solidifying the composite powder at predetermined positions in the powder layer or powder bed using the laser source at wavelength W.

In step S3, which is optional, a powder layer comprising the composite powder is applied on the shaped layer.

Steps S1 and S2, and optionally step S3, are repeated successively.

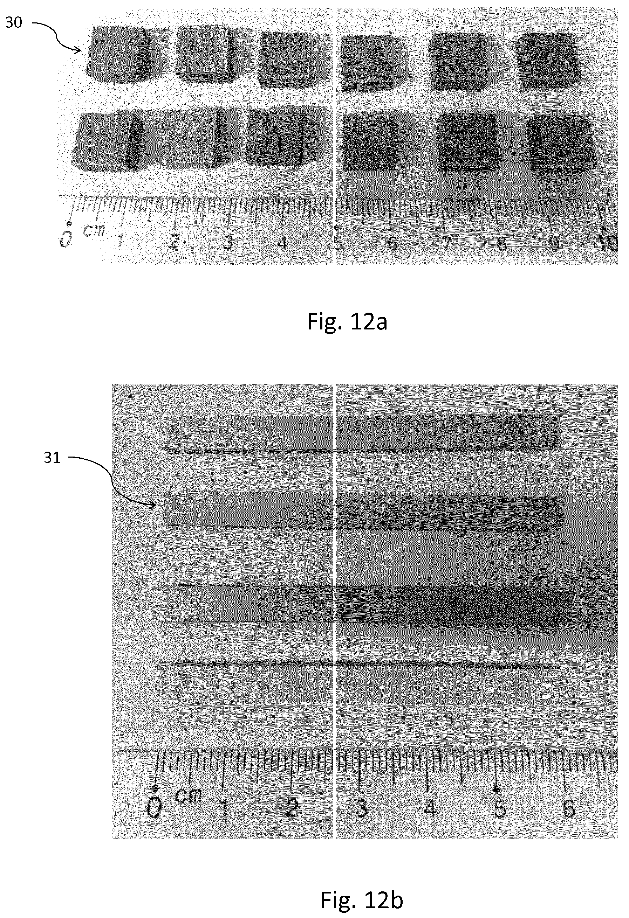

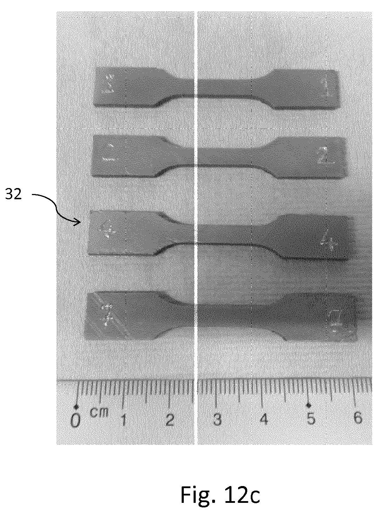

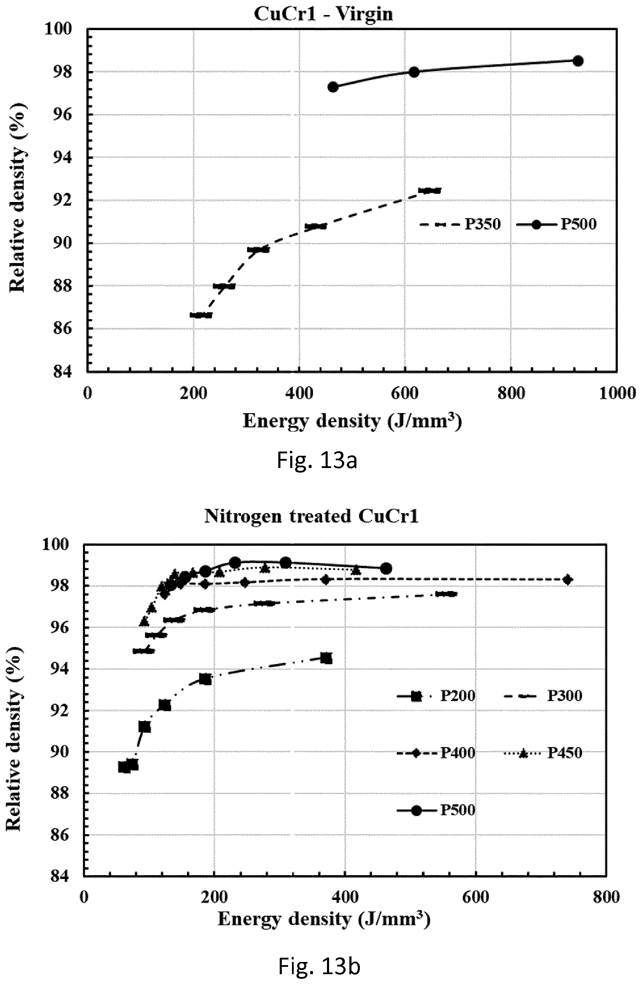

Parts were manufactured using the method of manufacturing an article using a composite powder according to embodiments of the present invention. A selective laser melting apparatus was used having a 1 kW single mode fiber laser with a wavelength of 1080 nm and a beam diameter of 37.5 $\mu$m ($1/e^2$ value) in a Gaussian intensity distribution profile. Referring to Figure 12a, for density measurements as will be described in relation to Figures 13a and 13b, hardness measurements and microstructure measurements, cube shaped parts 30 with a side length of 10 mm were manufactured. Referring to Figure 12b, for electrical conductivity measurements, bar shaped parts 31 were manufactured. Referring to Figure 12c, for tensile testing, dog bone shaped parts 32 were manufactured having gauge length of 16 mm, width at gauge length of 4 mm and thickness of 2 mm.

Referring to Figures 12a and 12b showing properties of the manufactured parts, the data sets are labelled according to the laser power used (e.g. P350 denotes a laser power of 350W). The energy density is calculated according to equation 1:

$$E = \frac{P}{vht}$$

where P is the laser power, $v$ is the laser scan velocity, $h$ is the hatch spacing and $t$ is the thickness of the powder layer. For each cube, a different laser power in the range 350W to 500W and beam velocity in the range 200 mm/s to 2000 mm/s was chosen. The hatch spacing, being the distance between two subsequent laser tracks in a single powder layer, was set to 90 $\mu$m, although other spacings are possible. The layer thickness, being the thickness of the layer of powder applied, was set to t = 30 $\mu$m. The beam diameter was 37.5 $\mu$m.

The density of the parts is measured using the Archimedes method and the relative density is calculated with respect to a theoretical density of 8.91 g/cm$^3$. That is, the % relative density is equal to the density as measured using the Archimedes method divided by the theoretical density, expressed as a percentage:

$$\% \text{ relative density} = \text{Archimedes measured density} *100 \text{ / theoretical density.}$$

It can be seen from Figures 13a and 13b that parts fabricated using the virgin powder (Figure 13a) are more porous and have lower relative densities than parts fabricated using the composite powder (Figure 13b), even at high energy densities. Parts fabricated using the composite powder have a higher relative density as compared with parts manufactured using the virgin powder at the same energy density. This holds true for a wide range of process parameters, indicating process stability. A laser power of 400W to 500W is sufficient to obtain parts with a relative density of greater than 97%. Parts fabricated from nitrogen treated Cu reach >98% relative density even at energy density of less than 200 J/mm$^3$, whereas to fabricate parts having >98% relative density, virgin powder requires an energy density of nearly 1000 J/mm$^3$, a fivefold increase. The N$_2$ treated powder parts have a plateau around 99% density, showing that the method yields dense parts for a large range of parameters.

The use of relatively low laser powers of less than 600W to fabricate dense parts is advantageous as it allows the laser back reflection to be further reduced, in addition to the reduction provided by the high absorption of the composite powder. In addition, thermal stresses in the part can be reduced and the energy requirements are less.

Further parts were manufactured at SLM parameters of: laser power (P) = 500 W, Laser velocity (v) = 800 mm/s, Hatch spacing (h) = 0.09 mm, Layer thickness (t) = 0.03mm. These parts were used for the experiments described hereinafter.

*Post Heat treatment*

The method of manufacturing an article according to embodiments of the present invention may include a post heat treatment step applied to the article after the build process is completed, that is, after the final repetition of step S2.

In a first heat treatment method, also referred to as conventional heat treatment, the sample is first heated in an inert atmosphere and then quenched in water. This is also referred to as a solutionising step and aims to obtain a homogeneous distribution of the alloy element within the highly reflective metal matrix of the article. The solutionising step is followed by heating of the article at a lower temperature than the solutionising step for a set time period. This is also referred to as an ageing step and aims to homogeneously precipitate the nano-sized particles of the alloy element, allowing improved tensile strength and ductility to be achieved. This first heat treatment method allows improvement of the mechanical and electrical properties of the article.

The first heat treatment method was carried out on cube shaped parts having a side length of 10 mm (Figure 12a) and bars having dimensions of 60 mm x 5mm x 2mm (Figure 12b) manufactured according to the method described hereinbefore. The cubes were used for hardness testing and the bars were used for electrical conductivity testing. For the solutionising step, the article was heated in a vertical tube furnace under an argon atmosphere. The tube of the furnace was made up of alumina (Al$_2$O$_3$) tube. The samples were held at 1050°C for 1 hour and then immediately quenched in water kept at room temperature. The ageing step took place at 450°C and had a variable duration. Immediately after the ageing step heating for the specified duration, the samples were quenched in water at room temperature.

The hardness of the heat treated articles was measured using a 0.3 kg load on FV-700 hardness tester (Future-Tech Corp., Tokyo, Japan) and an average of 5 measurements is reported.

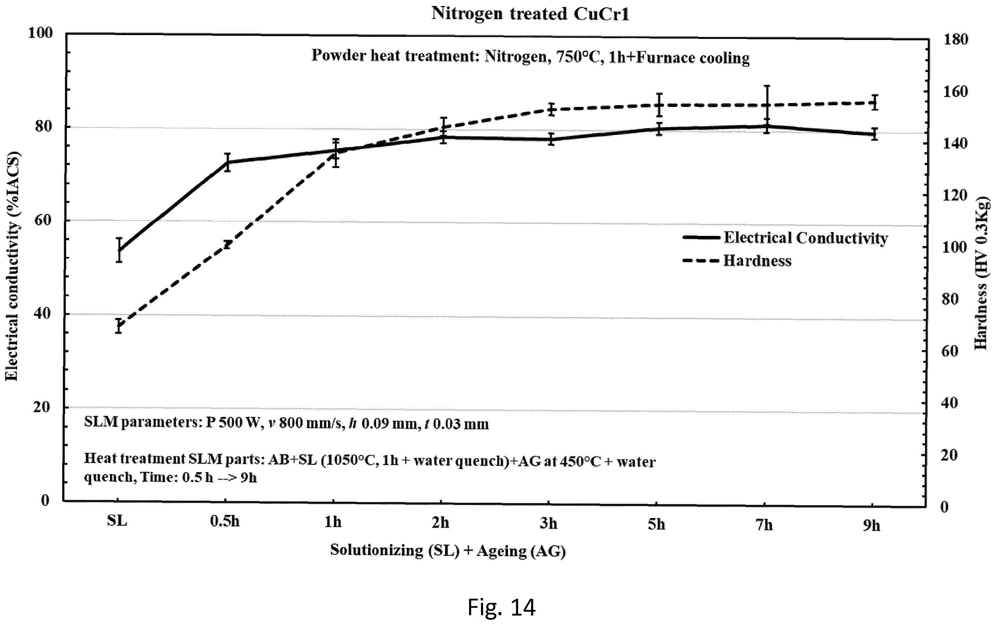

The electrical conductivity of the heat treated articles was measured using a Burster resistomat® model 2301-V001 and the four-point technique. Four rectangular bars were polished using grinding paper with grid size 320, cleaned with ethanol and dried before measuring electrical conductivity. The resistance of the sample was measured at three different lengths per sample (20 mm, 30 mm and 40 mm) and electrical conductivity was calculated. The values are reported as %IACS. IACS refers to the International Annealed Copper Standard. IACS value of 100% is fixed to electrical conductivity of $58 \times 10^6$ S/m at 20°C for pure Copper in annealed state. Thus, 60% of IACS means the conductivity of present material is 60% of pure Cu in annealed state. The hardness and electrical conductivity results are shown in Figure 14 as a function of the duration of the ageing step. Both the hardness and the electrical properties of the articles are improved upon heat treatment. Samples in the as solutionized state, that is, without having had an ageing step applied, have a hardness of 68 HV and electrical conductivity of 54 % of International annealed copper standard (IACS). Initially, at shorter ageing times, a rapid improvement in both hardness and electrical conductivity is observed as a function of the ageing times. The hardness and electrical conductivity reach a stable value at longer ageing times. An optimum post heat treatment at 450°C for 7h was chosen as providing the best combination of peak strength and electrical conductivity.

In a second heat treatment method, also referred to as direct ageing heat treatment, the as-built article is heated at a predetermined temperature (ageing temperature) for a predetermined time duration without the solutionising step.

The second heat treatment method was carried out on cube shaped and bar shaped articles manufactured according to the method described hereinbefore having the same dimensions as the articles subjected to the first heat treatment method. The ageing step took place at a temperature of 450°C for various durations. The hardness and electrical conductivity of the treated articles were measured as described hereinbefore with respect to the first heat treatment method.

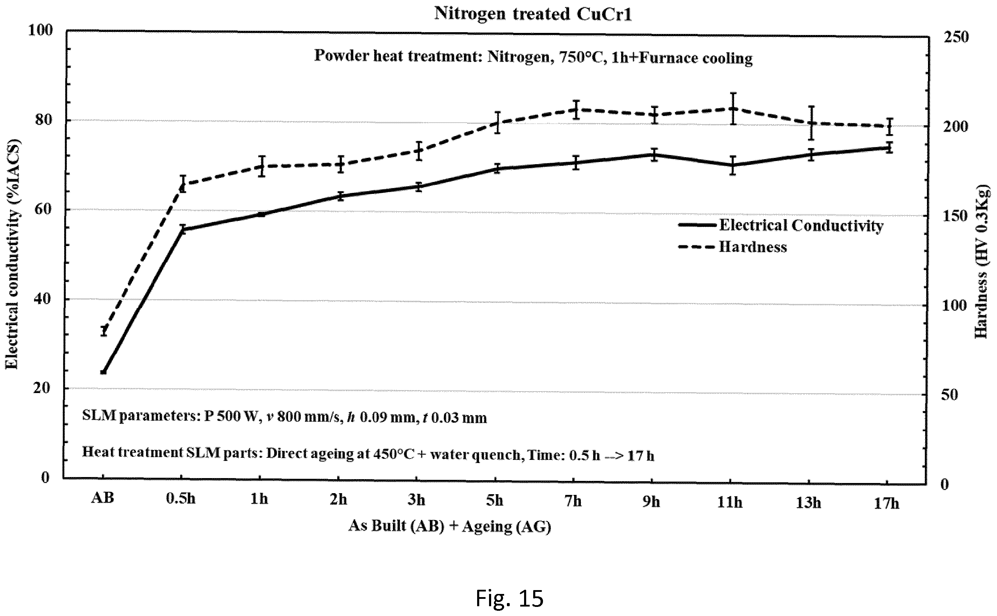

Figure 15 shows the hardness and electrical conductivity measurements for as built (AB) and direct aged samples (AB+AG) for different durations of the ageing step. The as built sample, wherein the ageing step has a duration of 0h i.e. no ageing step is performed, shows the lowest hardness and electrical conductivity of the samples treated using the second heat treatment method. However, the as built sample possesses a higher hardness and lower electrical conductivity as compared to the as solutionized sample (Figure 14, for an ageing step duration of 0h i.e. no ageing step is performed).

This can be attributed to the rapid solidification of the alloy during SLM resulting in the formation of supersaturated solid solution of Cu and Cr at room temperature.

Similarly to the ageing treatment in conventional heat treatment (SL+AG), hardness and electrical conductivity of directly aged samples (AB+AG) are also improved. The hardness obtained for direct aged samples (AB+AG) is higher than that achieved by corresponding conventionally heat treated (SL + AG) samples having the same ageing step duration. Rapid increase in both hardness and electrical conductivity is observed at shorter ageing times, whereas stable properties are obtained for longer ageing times. An optimum heat treatment was chosen at 450°C for 9h and tensile bars were heat treated using this duration and temperature.

Tensile testing was carried on the as built and heat treated samples (Figure 12c) using the optimal parameters for each heat treatment method and a stress-strain curve was plotted. Table 1 lists the electrical conductivity (%IACS) as measured using the method described hereinbefore, and the yield stress (YS), ultimate tensile stress (UTS), and elongation at break (EB) as obtained from the stress-strain curve. The yield stress is the stress at a strain of 0.2%. The UTS is the maximum stress sustained by the article during the test. The EB is the elongation at break that is measurement of change in length with respect to the original length of the sample, expressed as a percentage, as measured at the time of fracture of the article. Table 1 shows that the highest yield stress (YS) and ultimate tensile stress (UTS) is obtained for samples with direct ageing (AB+AG) heat treatment, whereas the highest ductility is realized in the as built state. Conventionally heat treated (SL+AG) samples exhibit better mechanical properties than AB samples; however, these mechanical properties are lower than those of the direct aged samples.

These properties can be compared with reference values for tensile and electrical properties of CuCrl alloy for parts manufactured using conventional cold working methods such as metal cold forming, metal press forming etc. and after subsequent heat treatment, the values being obtained from Granta, CES Edupack 2018.

*Table 1: Overview of tensile and electrical properties of parts in AB, SL+AG and AB+AG condition. The parts were fabricated using nitrogen treated CuCrl powder*

| State | % IACS | YS (MPa) | UTS (MPa) | %EB |
|---|---|---|---|---|
| **AB** | 24 ± 0.2 | 173 ± 7.1 | 254 ± 4.6 | 39 ± 1.6 |
| **SL+AG** | 81 ± 1.5 | 275 ± 3.5 | 439 ± 18.7 | 19 ± 3.1 |
| **AB+AG** | 73 ± 1.4 | 310 ± 13.1 | 548 ± 7 | 11 ± 0.8 |

*Table 2: Reference values for tensile and electrical properties of CuCrl alloy for parts manufactured using conventional methods such as casting, rolling etc. Overview of properties are provided in SL, SL+AG and SL+work hardened condition (Data obtained from: Granta Edupack, 2018)*

| State | % IACS | YS (MPa) | UTS (MPa) | %EB |
|---|---|---|---|---|
| **SL** | 33.6-35.2 | 90-110 | 235-250 | 28-32 |

(continued)

| State | % IACS | YS (MPa) | UTS (MPa) | %EB |
|---|---|---|---|---|
| SL+AG (optimized) | 75.3-86.2 | 290-310 | 405-420 | 14-16 |
| SL+work hardened | 33.6-35.2 | 180-290 | 350-510 | 4-7 |

Comparing tables 1 and 2 it can be seen that the properties obtained by SLM after post heat treatment are similar, or even better in some cases such as AB+AG. Therefore, SLM of composite powders according to embodiments of the present invention is a promising method to obtain functional parts with similar characteristics to the conventionally manufactured parts.

*Powder storage*

The oxygen content of a composite powder according to embodiments of the present invention was measured after storage in air and compared with the oxygen content of virgin CuCr1 powder.

The inert gas fusion method was used for oxygen analysis. This makes use of a furnace with water-cooled copper electrodes. The powder is fused in a high purity graphite crucible in the furnace by bringing it to high temperatures (3000°C) in the presence of an inert gas. The carbon crucible is effectively a resistor that supplies the heat necessary to fuse the sample, as well as carbon for the reduction of any oxygen present in the powder. The oxygen in the powder reacts with the carbon in the crucible to form CO or $CO_2$, which is then measured by infrared detection. For reactive metals a flux is also required to help the release of the oxygen from the sample.

The untreated (virgin) and nitrogen treated powders were stored in small plastic bottles under air medium/ without controlling the medium. The oxygen content measurements were carried out using the inert gas fusion technique. Referring to Table 3, it can be seen that the composite powder according to embodiments of the present invention is more resistant for oxygen pickup during storage/ageing in air medium than the untreated CuCrl powder. This is thought to be due to the diffusion layer comprising metal nitrides or carbides, which are inert with respect to oxygen.

Thus the composite powder according to embodiments of the present invention can be stored long-term without the need for a precisely oxygen-controlled atmosphere and can be re-used multiple times in additive manufacturing processes.

*Table 3: Oxygen content measurement for virgin CuCrl powder and N2 treated CuCrl powder for different storage period*

| Ageing/ Storage period (Months) | Virgin CuCr1 | Nitrogen treated CuCr1 |
|---|---|---|
| 0 | 17 | - |
| 1 | 685 | 68 |
| 3 | 1000 | 138 |
| 6 | 1700 | 121 |
| 9 | 2100 | 130 |
| 12 | 2200 | 94 |

*Microstructure analysis*

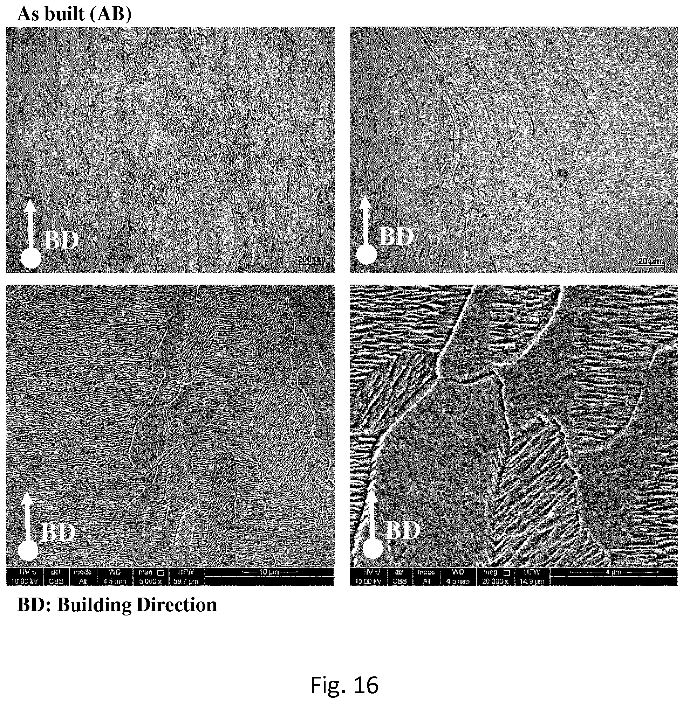

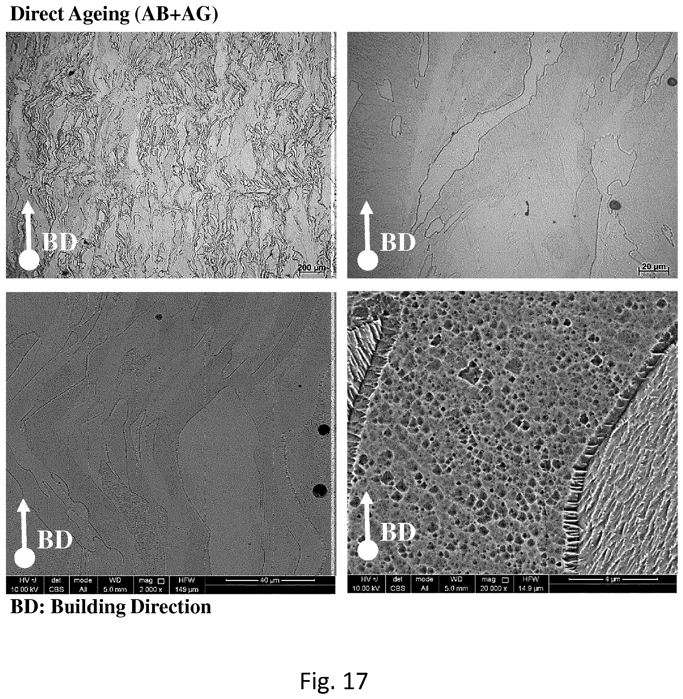

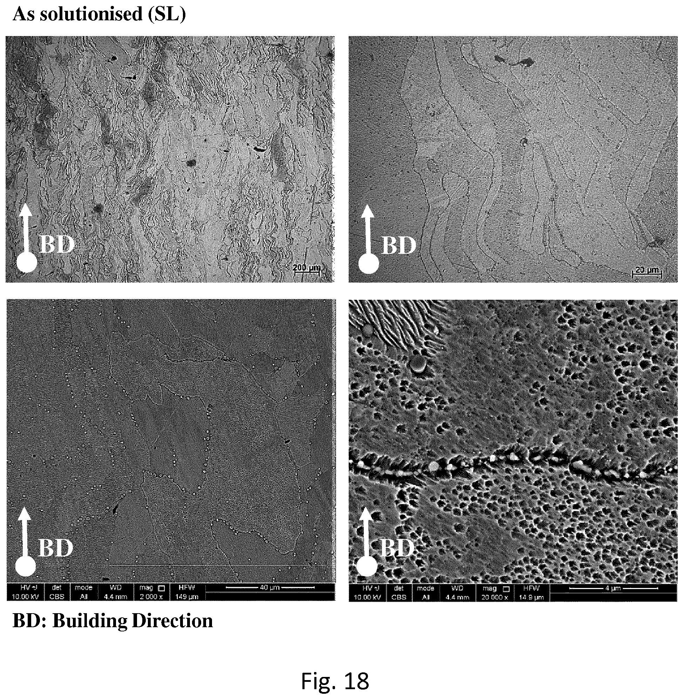

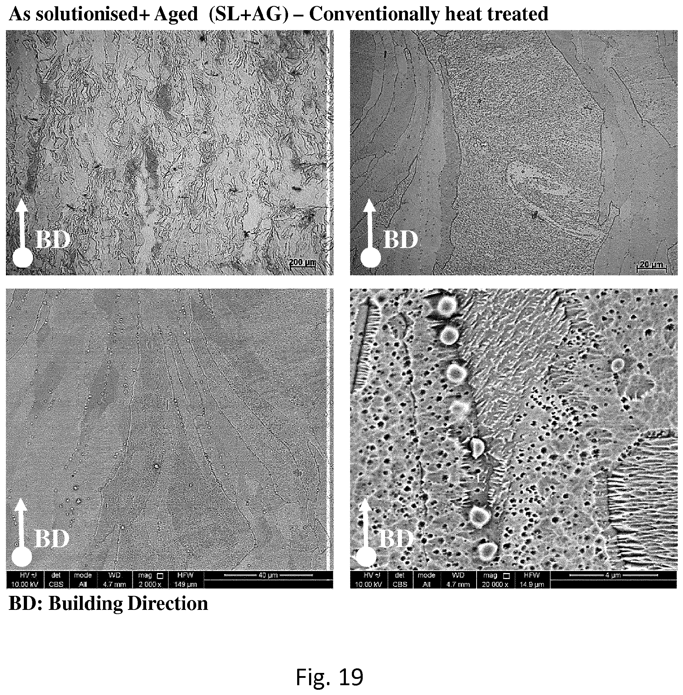

Microstructure analysis was performed on the as built (Figure 16), Direct aged (AB+AG, Figure 17), solutionized (SL, Figure 18) and conventionally post heat treated (SL+AG, Figure 19) samples at cross section. The samples for microstructure analysis were embedded in resin and ground on grinding papers with grit sizes 320, 800, 1200, and 4000, followed by polishing with 3 $\mu$m diamond suspension and etching for 20 sec in etchant composed of 3.5 g $FeCl_3$, 2.5 ml HCl and 75 ml $C_2H_5OH$. The microstructure of each sample was observed in etched condition using an optical light microscope (Axioskop 40 Pol/40 A Pol, Carl Zeiss) and scanning electron microscope (SEM, Nanosem 450, FEI).

In each Figure the top images are obtained by optical light microscopy and the bottom images are SEM images. The AB sample shows fine grained microstructure without any obvious Cr and CrN precipitates inside grain or at grain boundaries. Thus, the cooling rate achieved during SLM is very high and a supersaturated solid solution of Cu and Cr is realized at room temperature.

Direct aged samples show no significant microstructural change at macroscopic scale, however, uniformly distributed nanoscale precipitates of Cr and CrN can be seen inside the grains. These nanoscale precipitates are responsible for exceptional increase of mechanical and electrical properties. It can also be noticed that size of these precipitates is not increasing at a faster rate (slow reaction kinetics). Hence, the mechanical properties are nearly stable over wide range of heat treatment parameters.

For the as solutionised samples, as the cooling rate obtained during solutionizing treatment is slower than the SLM, a supersaturated solid solution of Cu and Cr is not obtained at room temperature. Accordingly, micron scale precipitates of Cr are observed at the grain boundaries. Consequently, a reduction in hardness and increase in electrical conductivity compared to as built sample is observed.

For the solutionised and aged samples, nucleation of nano size precipitates of Cr and CrN inside the grains can be seen and therefore an increase of mechanical and electrical properties is observed. Nevertheless, the mechanical properties (yield stress and ultimate tensile stress) observed in the SL+AG sample are lower compared to AB+AG samples. This can be attributed to the lower effective amount of Cr that is available for precipitation of nanoscale Cr and CrN precipitates and/or coarsening of grains and relieving of internal stresses during high temperature solutionizing treatment.

*Powder absorption*

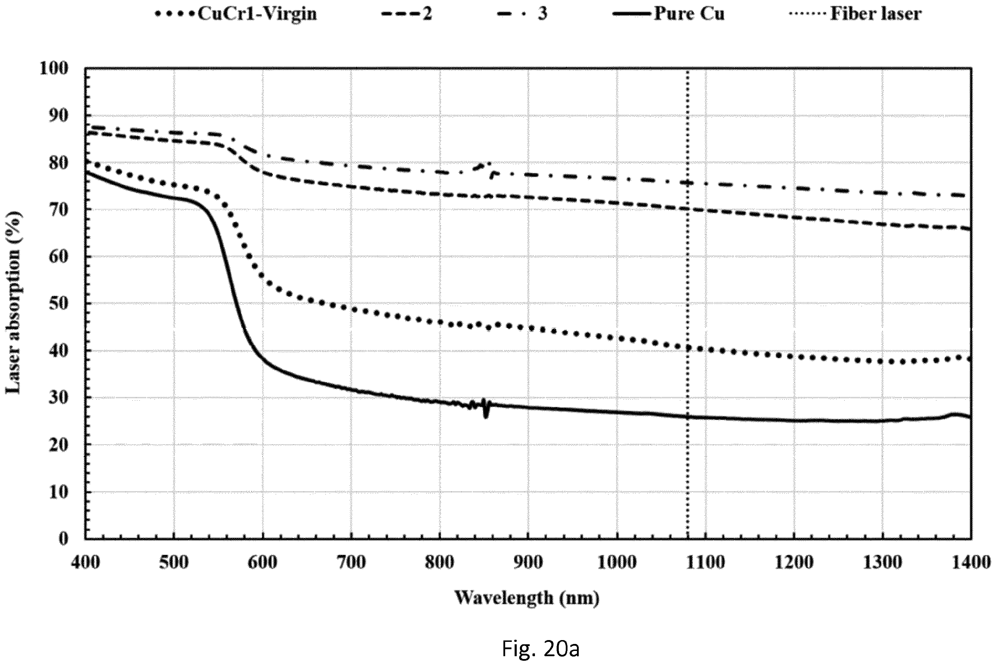

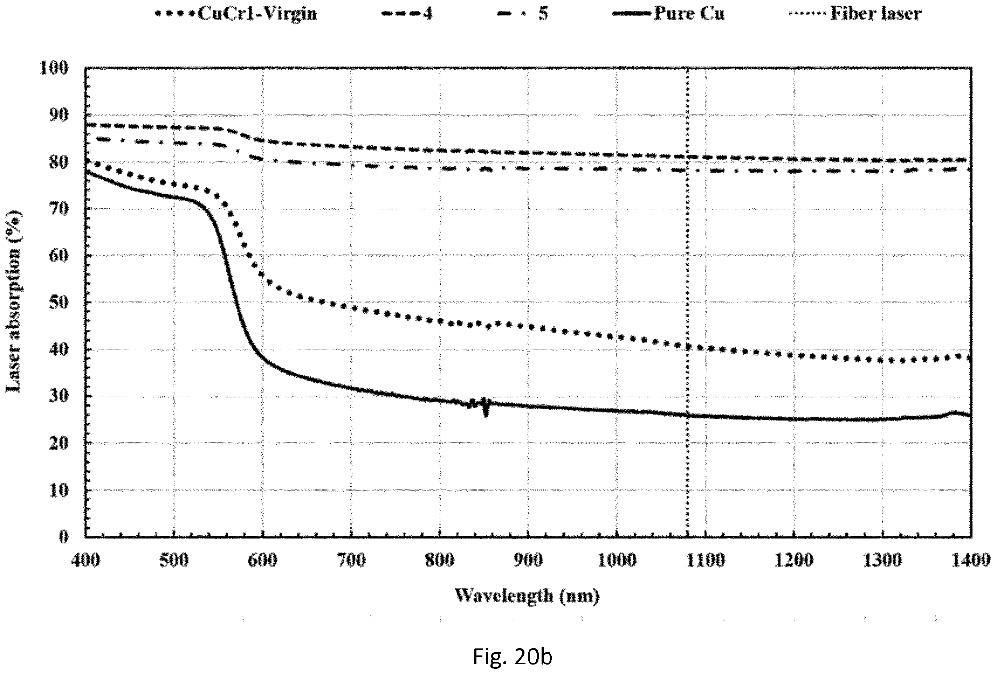

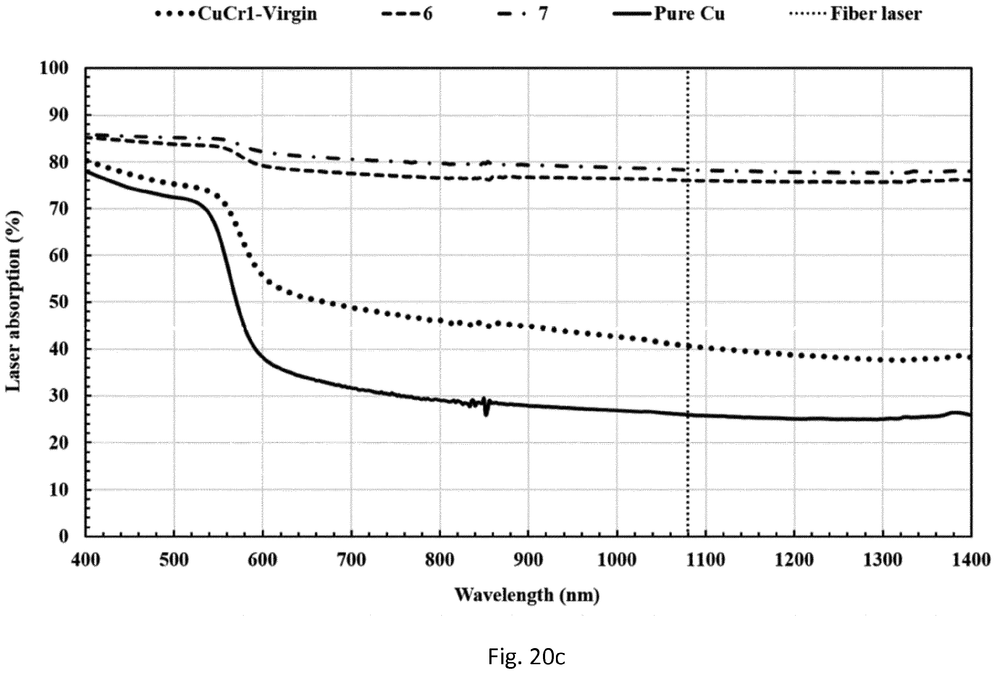

A range of composite powders were produced according to embodiments of the present invention and their absorption at 1080 nm was measured. The results are shown in Table 4 where the powder is labelled by the manufacturing temperature and time. For example, "CuCr1-HT**690°C,2.5h**,$N_2$" denotes (1 wt% Cr) copper chromium alloy which was heated to 690°C for 2.5 hours in a nitrogen atmosphere and then cooled in the furnace. The absorption was also measured at other wavelengths and the absorption spectra are shown in Figure 20a, 20b and 20c. The numbers in the legends of these plots refer to the numbers in Table 4. It can be seen that the optical absorption is improved from less than 40% for a pure copper powder to greater than 70% for composite powders according to embodiments of the present invention.

*Table 4: Laser absorption at 1080 nm for different powder samples*

| Sr.No. | Alloy | Laser absorption @1080 nm (%) |
|---|---|---|
| 1 | CuCr1-Virgin | 41 |
| 2 | CuCr1-HT**650°C,3.5h**,$N_2$ | 70 |
| 3 | CuCr1-HT**690°C,2.5h**,$N_2$ | 76 |
| 4 | CuCr1-HT**750°C,4h**,$N_2$ | 81 |
| 5 | CuCr1-HT**790°C,3h**,$N_2$ | 78 |
| 6 | CuCr1-HT**800°C,1h+**,$N_2$ | 76 |
| 7 | CuCr1-HT**850°C,5h**,$N_2$ | 78 |
| 8 | Pure Cu | 26 |

*Carbide formation*

A composite powder according to embodiments of the present invention was produced by mixing 0.1 wt.% of nano-sized carbon with CuCrl powder and heat treating at 750°C for 2.5 hours, in an argon atmosphere.

The resulting composite powder was used to manufacture cube shaped parts with dimensions of 10mm x 10mm x 10mm using an SLM process. In addition, a CuCr1 powder mixed with carbon powder, where the carbon formed 0.1 wt% of the powder, was also used to manufacture cube shaped parts with dimensions of 10 mm x 10 mm x 10 mm using an SLM process. The density of the resulting cubes was measured using the Archimedes principle and this was plotted as a function of the energy density during SLM, as described hereinbefore.

In the SLM processes, the laser scan velocity took a specific value between 200 and 1200 mm/s at 90 $\mu$m hatch spacing for each power value. For example, for the laser power P = 350 W, six cubes were manufactured, one each for a laser scan velocity of 200, 400, 600, 800, 1000, and 1200 m/s. For all measurements the hatch spacing $h$ = 90 $\mu$m, layer thickness t = 30 $\mu$m, and laser beam diameter 37.5 $\mu$m were fixed.

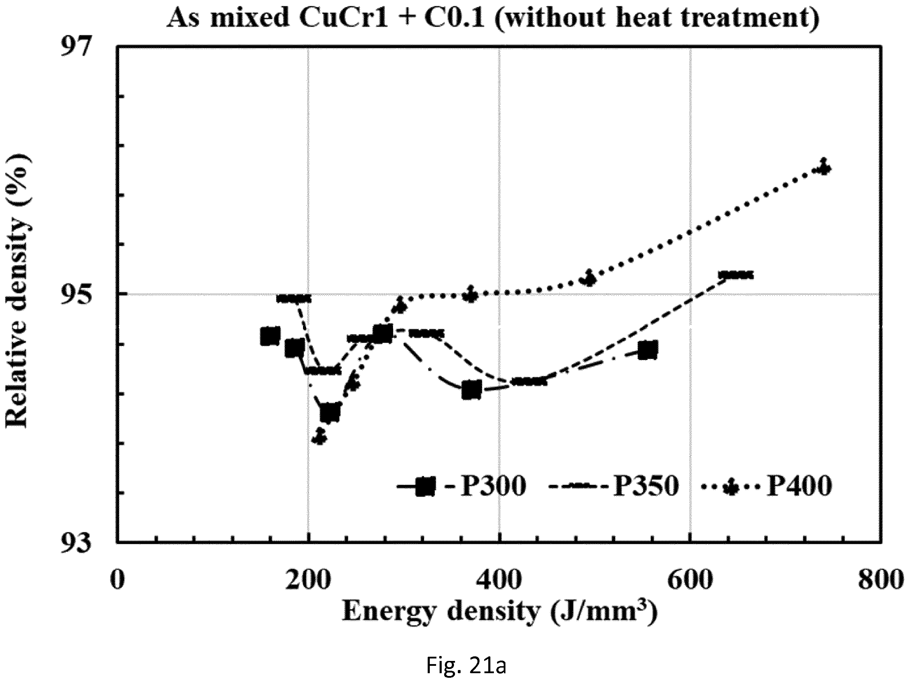

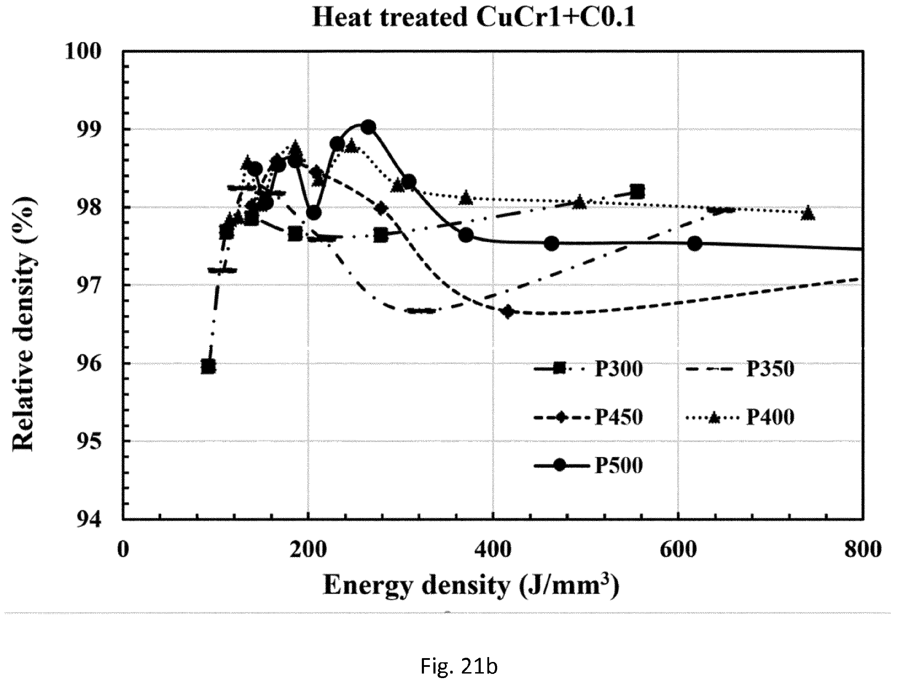

Referring to Figure 21a, it can be seen that for the carbon powder mixed with CuCr1, that is, without any heat treatment of the powder as described herein, the relative density is always less than 96.5%. Referring to Figure 21b, for the composite powder according to embodiments of the present invention, the relative density is, apart from one measurement, greater than 96.5% and most of the measurements are greater than 97%. The maximum relative density attained is 99% for an energy density of 265 J/mm³, obtained with a laser power P = 500 W and laser beam velocity $v$ = 700 mm/s.

The carbon content of the virgin powder, the composite powder, and the produced article were measured using coulomery (Coulomat 702 SO/CS, Ströhlein). The carbon content of the composite powder was reduced by 5.3% as compared to the carbon content of the virgin powder mixed with carbon, before the heat treatment to form the composite powder. The carbon content of the produced article was reduced by 10.3% as compared to the carbon content of the composite powder before SLM. The reduction is thought to be mainly due to evaporation in the form of carbon dioxide. The carbon which forms CrC is still measured.

## Claims

1. A composite powder (1) comprising powder particles (2), each powder particle (2) comprising:

   a core element (5); and
   a diffusion layer (3) at least partially surrounding the core element (5);
   wherein the core element (5) comprises a pre-alloyed highly reflective metal matrix and an alloy element wherein the metal matrix is selected from the group consisting of copper, gold, silver and any combination thereof and the alloy element is capable of forming a nitride, carbide or carbonitride;
   wherein the diffusion layer (3) comprises the alloy element and a nitride, carbide or carbonitride compound and wherein the nitride, carbide or carbonitride compound comprises the alloy element; and
   wherein the alloy element has an equilibrium solid solubility at room temperature in said metal of less than 2 wt% and/or wherein the alloy element is immiscible in said metal at room temperature
   and wherein the composite powder comprises an alloy depleted layer (4) between the diffusion layer (3) and the core element (5), the alloy depleted layer (4) comprising said metal and less than 2 wt% alloy element.

2. A composite powder (1) according to claim 1, wherein the alloy element comprises one or more elements selected from the group consisting of: Be, Mg, Ca, Sr, B, Al, Si, Ge, Ga, Th, Tl, In, Cr, Zr, Ti, Mo, Nb, Hf, Ta, V, W, Sc and Y.

3. A composite powder (1) according to any preceding claim, wherein the alloy element comprises less than 5 wt% of the total weight of the composite powder (1).

4. A composite powder (1) according to any preceding claim, wherein the nitride or carbide is thermodynamically stable at a first temperature which is greater than room temperature.

5. A composite powder (1) according to any preceding claim, wherein the diffusion layer (3) of a powder particle (2) has a thickness t and a powder particle (2) has a mean particle diameter $D$ and the ratio $t/D$ is between 0.0001 and 0.1.

6. A composite powder (1) according to any preceding claim having a flowability expressed in terms of the average angle and avalanche angle determined in a dynamic angle of reposes test, wherein the average angle and avalanche angle are less than 40° whereby said angles are determined according to methods detailed in the description.

7. Use of a composite powder (1) according to any preceding claim in a powder bed fusion additive manufacturing method.

8. A method of producing an article by powder bed fusion additive manufacturing or direct energy deposition additive manufacturing using a laser source at wavelength W, with W being larger than 800 nm, comprising the steps of:

   a) providing a powder layer or powder bed comprising composite powder (1) according to any of claims 1 to 6;
   b) forming a shaped layer by melting and solidifying the composite powder (1) at predetermined positions in the powder layer or powder bed using the laser source at wavelength W;
   c) optionally applying a powder layer comprising the composite powder (1) on the shaped layer;
   d) repeating steps a) and b) and optionally step c) successively;
   e) optionally heat treating the obtained article.

9. A method of producing a composite powder (1) according to any of claims 1 to 6, the method comprising:

   providing a pre-alloyed powder, comprising a metal selected from the group consisting of copper, gold, silver or any combination thereof and an alloy element capable of forming a nitride or a carbide and having an equilibrium solid solubility at room temperature in said metal of less than 2 wt% and/or being immiscible in said metal at room temperature;

forming the diffusion layer (3) by heating the pre-alloyed spherical powder in a nitrogen and/or carbon atmosphere at a temperature between 500°C and 900°C.

**Patentansprüche**

1. Verbundpulver (1), umfassend Pulverpartikel (2), jedes Pulverpartikel (2) umfassend:

   ein Kernelement (5); und
   eine Diffusionsschicht (3), die das Kernelement (5) zumindest teilweise umgibt;
   wobei das Kernelement (5) eine vorlegierte, hochreflektierende Metallmatrix und ein Legierungselement umfasst, wobei die Metallmatrix ausgewählt ist aus der Gruppe bestehend aus Kupfer, Gold, Silber und irgendeiner Kombination davon und das Legierungselement geeignet ist, ein Nitrid, Karbid oder Carbonitrid zu bilden;
   wobei die Diffusionsschicht (3) das Legierungselement und eine Nitrid-, Karbid- oder Carbonitridverbindung umfasst und
   wobei die Nitrid-, Karbid- oder Carbonitridverbindung das Legierungselement umfasst;
   und
   wobei das Legierungselement eine Gleichgewichts-Feststofflöslichkeit bei Raumtemperatur in dem Metall von weniger als 2 Gew.-% hat und/oder wobei das Legierungselement bei Raumtemperatur in dem Metall nicht mischbar ist
   und wobei das Verbundpulver eine legierungsverarmte Schicht (4) zwischen der Diffusionsschicht (3) und dem Kernelement (5) umfasst, wobei die legierungsverarmte Schicht (4) das Metall und weniger als 2 Gew.-% Legierungselement umfasst.

2. Verbundpulver (1) nach Anspruch 1, wobei das Legierungselement ein oder mehrere Elemente umfasst, ausgewählt aus der Gruppe bestehend aus: Be, Mg, Ca, Sr, B, Al, Si, Ge, Ga, Th, Tl, In, Cr, Zr, Ti, Mo, Nb, Hf, Ta, V, W, Sc und Y.

3. Verbundpulver (1) nach einem der vorstehenden Ansprüche, wobei EUR (DE)19 801 387.2 das Legierungselement weniger als 5 Gew.-% des Gesamtgewichts des Verbundpulvers (1) umfasst.

4. Verbundpulver (1) nach einem der vorstehenden Ansprüche, wobei das Nitrid oder Karbid bei einer ersten Temperatur, die größer als die Raumtemperatur ist, thermodynamisch stabil ist.

5. Verbundpulver (1) nach einem der vorstehenden Ansprüche, wobei die Diffusionsschicht (3) eines Pulverpartikels (2) eine Dicke t hat und ein Pulverpartikel (2) einen mittleren Partikeldurchmesser D hat und das Verhältnis $t/D$ zwischen 0,0001 und 0,1 ist.

6. Verbundpulver (1) nach einem der vorstehenden Ansprüche mit einer Fließfähigkeit, ausgedrückt als durchschnittlicher Winkel und Lawinenwinkel, bestimmt in einem dynamischen Schüttwinkelversuch, wobei der durchschnittliche Winkel und der Lawinenwinkel weniger als 40° sind, wobei die Winkel bestimmt werden gemäß den in der Beschreibung ausführlich berichteten Verfahren.

7. Verwendung eines Verbundpulvers (1) nach einem der vorstehenden Ansprüche in einem Pulverbett-Fusionsverfahren zur additiven Fertigung.

8. Verfahren zum Herstellen eines Gegenstands durch Pulverbett-Fusionsverfahren zur additiven Fertigung oder durch direktes Energieabgabeverfahren zur additiven Fertigung unter Verwendung einer Laserquelle mit einer Wellenlänge W, wobei W größer als 800 nm ist, umfassend die Schritte von:

   a) Bereitstellen einer Pulverschicht oder eines Pulverbettes, umfassend ein Verbundpulver (1) nach einem der Ansprüche 1 bis 6;
   b) Bilden einer geformten Schicht durch Schmelzen und Verfestigen des Verbundpulvers (1) an vorbestimmten Positionen in der Pulverschicht oder dem Pulverbett unter Verwendung der Laserquelle mit der Wellenlänge W; EUR (DE)19 801 387.2
   c) optional Aufbringen einer Pulverschicht, umfassend das Verbundpulver (1), auf die geformte Schicht;
   d) Wiederholen der Schritte a) und b) und optional des Schritts c) nacheinander;
   e) optional Wärmebehandeln des erhaltenen Gegenstands.

9. Verfahren zum Herstellen eines Verbundpulvers (1) nach einem der Ansprüche 1 bis 6, wobei das Verfahren umfasst:

Bereitstellen eines vorlegierten Pulvers, umfassend ein Metall, ausgewählt aus der Gruppe bestehend aus Kupfer, Gold, Silber oder irgendeiner Kombination davon, und ein Legierungselement, geeignet, ein Nitrid oder ein Karbid zu bilden und eine Gleichgewichts-Feststofflöslichkeit bei Raumtemperatur in dem Metall von weniger als 2 Gew.-% hat und/oder bei Raumtemperatur in dem Metall nicht mischbar ist;
Bilden der Diffusionsschicht (3) durch Erhitzen des vorlegierten kugelförmigen Pulvers in einer Stickstoff- und/oder Kohlenstoffatmosphäre bei einer Temperatur zwischen 500 °C und 900 °C.

## Revendications

1. Poudre composite (1) comprenant des particules de poudre (2), chaque particule de poudre (2) comprenant :

un élément de cœur (5) ; et
une couche de diffusion (3) entourant au moins partiellement l'élément de cœur (5) ;
dans laquelle l'élément de cœur (5) comprend une matrice métallique hautement réfléchissante pré-alliée et un élément d'alliage, parmi lesquels la matrice métallique est choisie dans le groupe constitué par le cuivre, l'or, l'argent et l'une quelconque de leurs combinaisons, et l'élément d'alliage est capable de former un nitrure, carbure ou carbonitrure ;
dans laquelle la couche de diffusion (3) comprend l'élément d'alliage et un composé nitrure, carbure ou carbonitrure et
dans laquelle le composé nitrure, carbure ou carbonitrure comprend l'élément d'alliage ; et
dans laquelle l'élément d'alliage a une solubilité à l'état solide à l'équilibre à la température ambiante dans ledit métal inférieure à 2 % en poids et/ou dans laquelle l'élément d'alliage est immiscible dans ledit métal à la température ambiante,
et laquelle poudre composite comprend une couche appauvrie en alliage (4) entre la couche de diffusion (3) et l'élément de cœur (5), la couche appauvrie en alliage (4) comprenant ledit métal et moins de 2 % en poids d'élément d'alliage.

2. Poudre composite (1) selon la revendication 1, dans laquelle l'élément d'alliage comprend un ou plusieurs éléments choisis dans le groupe constitué par : Be, Mg, Ca, Sr, B, Al, Si, Ge, Ga, Th, Tl, In, Cr, Zr, Ti, Mo, Nb, Hf, Ta, V, W, Sc et Y.

3. Poudre composite (1) selon l'une quelconque des revendications précédentes, dans laquelle l'élément d'alliage comprend moins de 5 % en poids, par rapport au poids total, de la poudre composite (1).

4. Poudre composite (1) selon l'une quelconque des revendications précédentes, dans laquelle le nitrure ou carbure est thermodynamiquement stable à une première température qui est supérieure à la température ambiante.

5. Poudre composite (1) selon l'une quelconque des revendications précédentes, dans laquelle la couche de diffusion (3) d'une particule de poudre (2) a une épaisseur t et une particule de poudre (2) a un diamètre de particule moyen D et le rapport $t/D$ est compris entre 0,0001 et 0,1.

6. Poudre composite (1) selon l'une quelconque des revendications précédentes, ayant une coulabilité exprimée en termes de l'angle moyen et de l'angle d'avalanche, déterminés dans un test d'angle dynamique d'éboulement dans lequel l'angle moyen et l'angle d'avalanche sont inférieurs à 40°, moyennant quoi lesdits angles sont déterminés conformément aux procédés détaillés dans la description.

7. Utilisation d'une poudre composite (1) selon l'une quelconque des revendications précédentes dans un procédé de fabrication additive par fusion sur lit de poudre.

8. Procédé de production d'un article par fabrication additive par fusion sur lit de poudre ou fabrication additive par déposition d'énergie directe utilisant une source de laser à une longueur d'onde W, W étant supérieure à 800 nm, comprenant les étapes de :

a) fourniture d'une couche de poudre ou d'un lit de poudre comprenant une poudre composite (1) selon l'une quelconque des revendications 1 à 6 ;
b) formation d'une couche mise en forme par fusion et solidification de la poudre composite (1) à des positions prédéterminées dans la couche de poudre ou le lit de poudre utilisant la source de laser à la longueur d'onde W ;

c) éventuellement application d'une couche de poudre comprenant la poudre composite (1) sur la couche mise en forme ;

d) répétition des étapes a) et b) et éventuellement de l'étape c) successivement ;

e) éventuellement traitement à la chaleur de l'article obtenu.

9. Procédé de production d'une poudre composite (1) selon l'une quelconque des revendications 1 à 6, le procédé comprenant :

la fourniture d'une poudre pré-alliée, comprenant un métal choisi dans le groupe constitué par le cuivre, l'or, l'argent et l'une quelconque de leurs combinaisons, et un élément d'alliage capable de former un nitrure ou un carbure et ayant une solubilité à l'état solide à l'équilibre à la température ambiante dans ledit métal inférieure à 2 % en poids et/ou étant immiscible dans ledit métal à la température ambiante ;

la formation de la couche de diffusion (3) par chauffage de la poudre sphérique pré-alliée dans une atmosphère d'azote et/ou de carbone à une température comprise entre 500°C et 900°C.

1

2

Fig. 1

2

5

t

D

4

3

Fig. 2

Fig. 3a

Fig. 3b

Fig. 4

Fig. 5a

Fig. 5b

Fig. 6a

Fig. 6b

Fig. 7a

Fig. 7b

Fig. 7c

Fig. 7d

Fig. 7e

Fig. 7f

Fig. 7g

Fig. 8

Fig. 9

Fig. 10a

Fig. 10b

Fig. 10c

Fig. 11

Fig. 12a

Fig. 12b

Fig. 12c

Fig. 13a

Fig. 13b

Fig. 14

Fig. 15

EP 3 880 387 B1

**As built (AB)**

**BD: Building Direction**

Fig. 16

**Direct Ageing (AB+AG)**

**BD: Building Direction**

Fig. 17

**As solutionised (SL)**

**BD: Building Direction**

Fig. 18

**As solutionised+ Aged  (SL+AG) – Conventionally heat treated**

**BD: Building Direction**

Fig. 19

Fig. 20a

EP 3 880 387 B1

Fig. 20b

Fig. 20c

Fig. 21a

Fig. 21b

EP 3 880 387 B1

Fig. 22

Fig. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017225228 A1
- US 20180193916 A

- WO 0156736 A2

**Non-patent literature cited in the description**

- *Physical Review*, 1959, vol. 113 (4), 1002-1005